# EUROPEAN PATENT APPLICATION

(11) **EP 4 586 451 A1**
(43) Date of publication of application: **16.07.2025**
(21) Application number: 23863000.8
(22) Date of filing: 28.08.2023
(51) Int. Cl.: H02J 7/00, B60L 58/19, H02M 7/48

(54) **ELECTRIC POWER CONVERSION DEVICE AND PROGRAM**

(30) Priority: 09.09.2022 JP 2022144021
(71) Applicant: DENSO CORPORATION, Kariya-city, Aichi 448-8661 (JP)
(72) Inventor: TOYAMA, Keisuke, Kariya-city Aichi 448-8661 (JP); KUBO, Shunichi, Kariya-city Aichi 448-8661 (JP)
(74) Representative: TBK
(86) International application number: PCT/JP2023/031005
(87) International publication number: WO 2024/053461

(57) **Abstract**

The power conversion apparatus is provided with a high voltage side electrical path (22H) capable of electrically connecting to a positive terminal of a first storage battery (31), a low voltage side electrical path (22L) capable of electrically connecting to a negative terminal of a second storage battery (32), an inverter (20) and a motor (10). The power conversion apparatus is further provided with a battery interconnection switch (40) disposed on an inter-storage electrical path (24) that electrically connects between a negative terminal of the first storage battery and a positive terminal of the second storage battery, a bypass switch (50, 51) that performs at least one of an electrical connection between the negative terminal of the first storage battery and the negative terminal of the second storage battery and an electrical connection between the positive terminal of the first storage battery and the positive terminal of the second storage battery, and a control unit (100) that detects, before controlling one switch between the battery interconnection switch and the bypass switch to be ON, whether the other switch is stuck ON.

## Description

### [Cross-Reference of Related Applications]

The present application is based on Japanese Application No. 2022-144021 filed on September 9, 2022, the content of which is incorporated herein.

### BACKGROUND

### [Technical Field]

The present disclosure relates to a power conversion apparatus and a program thereof.

### [Description of the Related Art]

As a related art, a control apparatus is known which detects whether switches in the power conversion apparatus are stuck in an ON state when charging an on-vehicle battery using an external charger. For example, the control apparatus disclosed by PTL1 transmits an ON command to an object switch to be examined and detects voltages across the object switch. At this moment, when the voltages across the object switch are the same, the control apparatus detects that the switch is stuck in the ON state.

### [Citation List]

### [Patent Literature]

[PTL1] U.S. Patent No.11245346B2

### [Summary of the Invention]

In the case where switches in the power conversion apparatus are connected in parallel, while either one switch is stuck in the ON state, if the other switch turns ON, a short-circuit current flows between the switches.

The present disclosure has been achieved in light of the above-described issues, and its object is to provide a power conversion apparatus and a program thereof, capable of preventing short-circuit current from flowing between switches.

According to the present disclosure, a power conversion apparatus is provided with a high voltage side electrical path capable of electrically connecting to a positive terminal of a first storage battery, a low voltage side electrical path capable of electrically connecting to a negative terminal of a second storage battery, an inverter having an upper arm switch electrically connected to the high voltage side electrical path and a lower arm switch electrically connected to a low voltage side electrical path, and a motor electrically connected to a connection point between the upper arm switch and the lower arm switch.

The power conversion apparatus includes: a battery interconnection switch disposed on an inter-storage electrical path that electrically connects between a negative terminal of the first storage battery and a positive terminal of the second storage battery; a bypass switch that performs at least one of an electrical connection between the negative terminal of the first storage battery and the negative terminal of the second storage battery and an electrical connection between the positive terminal of the first storage battery and the positive terminal of the second storage battery; and a control unit that detects, before controlling one switch between the battery interconnection switch and the bypass switch to be ON, whether the other switch is stuck ON

According to the above-described configuration, in the case where one switch is stuck in the ON state, since the other switch is not required to be turned ON, short-circuit current is prevented from flowing between switches.

### [Brief Description of the Drawings]

The above-described objects and other objects, features and advantages of the present disclosure will be clarified further by the following detailed description with reference to the accompanying drawings.

The drawings are:
Fig.1 is a diagram showing an overall configuration of a system according to a first embodiment;
Fig.2 is a diagram showing an operational state of a switch during low voltage charging;
Fig.3 is a diagram showing an operational state of a switch during low voltage charging;
Fig.4 is a diagram showing an operational state of a switch during high voltage charging;
Fig.5 is a diagram showing a mechanism where a short-circuit current is produced;
Fig.6 is a diagram showing a method for detecting a stuck-ON state using a smoothing capacitor according to the first embodiment;
Fig.7 is a diagram showing a method for detecting a stuck-ON state using a smoothing capacitor according to the first embodiment;
Fig.8 is a diagram showing a method for detecting a stuck-ON state using a smoothing capacitor according to the first embodiment;
Fig.9 is a flowchart showing an operation example of a control apparatus according to the first embodiment;
Fig.10 is a diagram showing a method for detecting a stuck-ON state using a smoothing capacitor according to a second embodiment;
Fig.11 is a diagram showing a method for detecting a stuck-ON state using a smoothing capacitor according to the second embodiment;
Fig.12 is a diagram showing a method for detecting a stuck-ON state using a smoothing capacitor according to the second embodiment;
Fig. 13 is a flowchart showing an operation example performed by a control apparatus according to the second embodiment;
Fig.14 is a diagram showing a method for detecting a stuck-ON state according to a third embodiment;
Fig. 15 is a flowchart showing an operation example of a control apparatus according to the third embodiment;
Fig.16 is a flowchart showing an operation example of a control apparatus according to the third embodiment;
Fig.17 is a flowchart showing an operation example of a control apparatus according to the third embodiment;
Fig.18 is a flowchart showing an operation example of a control apparatus according to the third embodiment;
Fig.19 is a flowchart showing an operation example of a control apparatus according to a fourth embodiment;
Fig.20 is a flowchart showing an operation example of a control apparatus according to the fourth embodiment;
Fig.21 is a flowchart showing an operation example of a control apparatus according to the fourth embodiment;
Fig.22 is a flowchart showing an operation example of a control apparatus according to the fourth embodiment;
Fig.23 is a flowchart showing an operation example of a control apparatus according to the fourth embodiment;
Fig.24 is a flowchart showing an operation example of a control apparatus according to the fourth embodiment;
Fig.25 is a diagram showing an overall configuration of a system according to a fifth embodiment;
Fig.26 is a flowchart showing an operation example of a control apparatus according to the fifth embodiment;
Fig.27 is a flowchart showing an operation example of a control apparatus according to a modification example of the fifth embodiment;
Fig.28 is a diagram showing an overall configuration of a system according to a sixth embodiment;
Fig.29 is a flowchart showing an operation example of a control apparatus according to a sixth embodiment;
Fig.30 is a flowchart showing an operation example of a control apparatus according to the sixth embodiment;
Fig.31 is a flowchart showing an operation example of a control apparatus according to the sixth embodiment;
Fig.32 is a flowchart showing an operation example of a control apparatus according to the sixth embodiment;
Fig.33 is a diagram showing an overall configuration of a system according to a seventh embodiment;
Fig.34 is a diagram showing an overall configuration of a system according to an eighth embodiment;
Fig.35 is a diagram showing an overall configuration of a system according to a ninth embodiment; and
Fig.36 is a diagram showing an overall configuration of a system according to a tenth embodiment.

### [Description of Embodiments]

With reference to the drawings, a plurality of embodiments will be described. In the plurality of embodiments, the same reference numbers or reference numbers of which the position of digit indicating hundred or higher is different may be applied to functionally and/or structurally the same portions or mutually related portions. For the portions which are functionally or structurally the same or mutually related portions, description of other embodiments may be applied.

### <First Embodiment>

Hereinafter, with reference to the drawings, a first embodiment in which a power conversion apparatus according to the present embodiment is embodied will be described. The power conversion apparatus according to the present embodiment is mounted to an electric vehicle such as an electric car and a hybrid vehicle, an electric aircraft and an electric ship, and constitutes an electric mobile system.

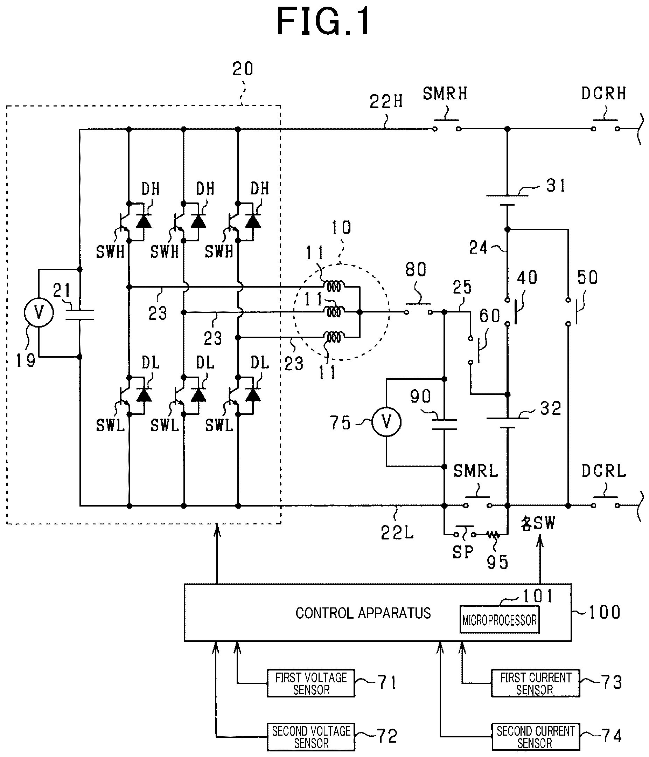

The electric mobile system is provided with a power conversion apparatus. The power conversion apparatus is provided with, as shown in Fig.1, a motor 10, an inverter 20, a high voltage side electrical path 22H and a low voltage side electrical path 22L. The motor 10 is configured as a three-phase synchronous machine, including an armature winding 11 of U, V, W phases which are connected as a star-connection, and a rotor (not shown). The armature windings 11 corresponding to respective phases are shifted by 120° relative to each other. The motor 10 is configured as a permanent magnet synchronous machine. The rotor is configured to be capable of transmitting a motive force between the rotor and driving wheels of the vehicle. Hence, the motor 10 serves a torque generation source for causing the vehicle to travel.

The inverter 20 is provided with three series-connected bodies for three-phases, each including an upper arm switch SWH and a lower arm switch SWL. An upper arm diode DH as a free-wheel diode is reversely connected in parallel to the upper arm switch SWH, and a lower arm diode DL is reversely connected in parallel to the lower arm switch SWL. According to the present embodiment, the respective switches SWH and SWL are configured of IGBTs.

The inverter 20 includes a smoothing capacitor 21. At the high voltage side terminal of the smoothing capacitor 21, a first end side of the high voltage side electrical path 22H having a longitudinal shape is connected. Note that the smoothing capacitor 21 may be provided externally to the inverter. The voltage at the smoothing capacitor 21 is detected by a SC voltage sensor.

In each phase, a first end of the armature winding 11 is connected to a connection point between an emitter as a low voltage side terminal of the upper arm switch SWH and a collector as a high voltage side terminal of the lower arm switch SWL via a conduction member 23 such as a bus bar. The second ends of the armature windings 11 of respective phases are connected together at the neutral point. According to the present embodiment, the number of turns of the armature windings 11 in respective phases are set to the same number. Thus, the armature windings 11 in respective phases have the same inductance.

A high voltage side electrical path 22H is connected to collectors of the upper arm switches SWH in respective phases. A low voltage side electrical path 22L is connected to emitters of the lower arm switches SWL in respective phase.

The electric mobile system is provided with a first storage battery 31 (corresponding to first storage unit) and a second storage battery 32 (corresponding to second storage unit). The respective storage batteries 31 and 32 serve as a power source for rotationally driving the rotor of the motor 10. The respective storage batteries 31 and 32 are battery assemblies each configured of series-connected body in which a plurality of battery cell (unit cell) are connected in series. The positive terminal of the first storage battery 31 is connected to a high voltage side electrical path 22H, and the negative terminal of the second storage battery 32 is connected to the low voltage side electrical path 22L. According to the present embodiment, the terminal voltage (e.g. rated voltage) of the first storage battery 31 is 400 V, and the terminal voltage (e.g. rated voltage) of the second storage voltage 32 is 200 V. However, it is not limited thereto. A voltage higher than or equal the terminal voltage (e.g. rated voltage) of the second storage battery may be sufficient for the terminal voltage of the first storage battery 31. The battery cell is, for example, a secondary battery such as a lithium-ion battery.

The respective storage batteries 31 and 32 are capable of being charged from an external charger provided outside the vehicle which will be described later. The external charger is a stationary-type charger for example. In a second terminal side of the high voltage side electrical path 22H which is opposite to a connection point side of the smoothing capacitor 21, a positive electrode side connection part is provided for connecting a positive terminal of the external charger. In a second terminal side of the low voltage side electrical path 22L which is opposite to a connection point side of the smoothing capacitor 21, a negative electrode side connection part is provided for connecting a negative terminal of the external charger.

The power conversion apparatus is provided with a main switch for electrically connecting or disconnecting between the first and second storage batteries 31 and 32, and the inverter 20. Specifically, as a main switch, a high voltage side main switch SMRH and a low voltage side main switch SMRL are provided. Also, the power conversion apparatus is provided with a charge switch for electrically connecting or disconnecting between the external charger and the first and second storage batteries 31 and 32. Specifically, as a charge switch, a high voltage side charger switch DCRH and a low voltage side charge switch DCRL are provided. According to the present embodiment, respective switches SMRH, SMRL, DCRH and DCRL are described as a mechanical relay. However, it is not limited thereto and these switches may be configured as semiconductor switches. The respective switches SMRH, SMRL, DCRH and DCRL prevent bi-directional current from flowing during the OFF state, and allow bi-directional current to flow during the ON state. For the high voltage side electrical path 22H, the high voltage side main switch SMRH and the high voltage side charge switch DCRH are provided in this order from the inverter 20 side. For the low voltage side electrical path 22L, the low voltage side main switch SMRL and the low voltage side charge switch DCRL are provided in this order from the inverter 20 side.

The power conversion apparatus is provided with, as a switch for changing a connection state of the first storage battery 31 and the second storage battery 32 between a state of serially connecting the external charger or a state of parallelly connecting the external charger, a battery interconnection switch 40, a negative terminal connection bypass switch 50, a motor side switch 60 and a connection switch 80. In the present embodiment, the battery interconnection switch 40, the negative terminal connection bypass switch 50, the motor side switch 60 and the connection switch 80 are described as mechanical switches, but it is not limited thereto and these switches may be configured as semiconductor switches. The battery interconnection switch 40, the negative terminal connection bypass switch 50, the motor side switch 60 and the connection switch 80 prevent bi-directional current from flowing during the OFF state, and allow the bi-directional current to flow during the ON state.

The battery interconnection switch 40 is provided on a battery interconnecting path 24 (corresponding to inter-storage electrical path) that connects the negative terminal of the first storage battery 31 and the positive electrode of the second storage battery 32. When the battery interconnection switch 40 is in the ON state, the negative terminal of the first storage battery 31 and the positive electrode of the second storage battery 32 are electrically connected. On the other hand, when the battery interconnection switch 40 is in the OFF state, the negative terminal of the first storage battery 31 and the positive electrode of the second storage battery 32 are electrically disconnected.

The negative terminal connection bypass switch 50 connects between the negative terminal of the first storage battery 31 and the low voltage side electrical path 22L. In the case where the negative terminal connection bypass switch 50 is in an ON state, the negative terminal of the first storage battery 31 and the negative terminal of the storage battery 32 are electrically connected. On the other hand, the negative terminal connection bypass switch 50 is in an OFF state, the negative terminal of the first storage battery 31 and the negative terminal of the second storage battery 32 are electrically disconnected.

The motor side switch 60 and the connection switch 80 are provided on a motor side electrical path 25 that connects a portion between the battery interconnection switch 40 and the second storage battery 32 side on the battery interconnecting path 24, and the neutral point of the armature winding 11. More specifically, the connection switch 80 is provided on the motor side electrical path 25 at a portion closer to the neutral point than to a portion of the motor side switch 60. In the case where the motor side switch 60 and the connection switch 80 are in an ON state, the neutral point of the armature winding 11 and the positive terminal of the second storage battery 32 are electrically connected. On the other hand, in the case where the motor side switch 60 and the connection switch 80 are in an OFF state, the neutral point of the armature winding 11 and the positive terminal of the second storage battery 32 are electrically disconnected. The motor side electrical path 25 electrically connects between the neutral point of the armature winding 11 and a portion on the battery interconnecting path 24 closer to the second storage battery 32 side than to the battery interconnection switch 40.

The power conversion apparatus is provided with a first voltage sensor 71 that detects a terminal voltage of the first storage battery 31 and a second voltage sensor 72 that detects a terminal voltage of the second storage battery 32. The power conversion apparatus is provided with a first current sensor 73 that detects current flowing through the first storage battery 31 and a second current sensor 74 that detects current flowing through the second storage battery 32. The first current sensor 73 is provided on an electrical path that connects the positive terminal of the first storage battery 31 and the high voltage side electrical path 22H. The second current sensor 74 is provided on an electrical path that connects the negative terminal of the second storage battery 32 and the low voltage side electrical path 22L. The power conversion apparatus is provided with, as other sensors, a rotation angle sensor that detects a rotation angle (electrical angle) of the rotor and a phase current sensor that detects a phase current flowing through the armature winding 11 of respective phases.

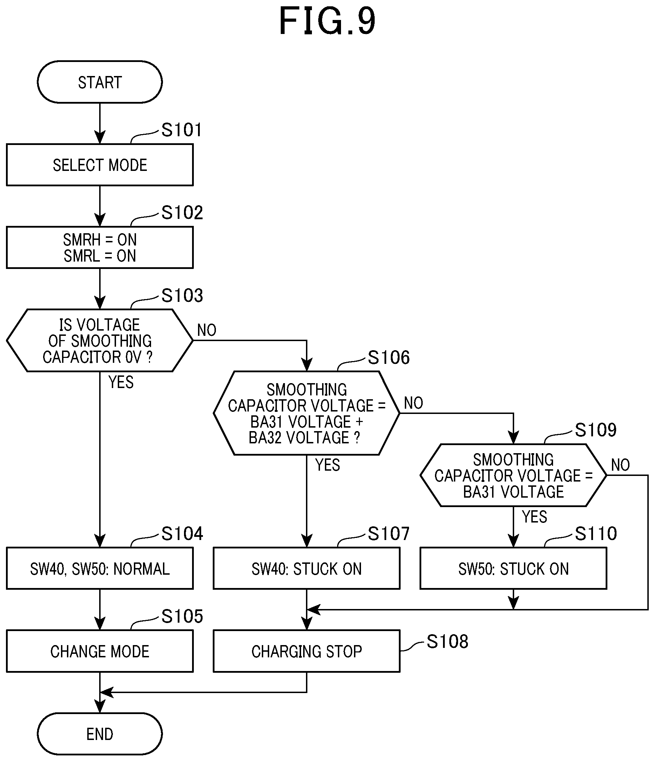

The detection values of respective sensors are transmitted to a control apparatus 100 (corresponding to control unit) included in the power conversion apparatus. The control apparatus 100 is mainly configured of microprocessor 101. The microprocessor 101 includes a CPU. The functions provided by the microprocessor 101 can be accomplished by software stored in a substantial memory device and a computer that executes the software, only the software, only hardware or combination thereof. For example, in the case where the microprocessor 101 is configured of an electronic circuit as the hardware, the microprocessor 101 can be configured of a digital circuit including a large number of logic circuits or an analog circuit. For example, the microprocessor 101 executes programs stored in a non-transitory tangible storage medium as a memory unit included in the microprocessor 101. The programs include programs for processes shown in Fig.9 or the like which will be described later. The programs are executed, thereby performing methods corresponding to the programs. The memory unit is a non-volatile memory for example. The programs stored in the memory unit can be updated using a communication network such as the internet as an over the air (OTA) technique.

The control apparatus 100 performs a switching control of respective switches SWH and SWL that constitute the inverter 20 such that the control quantity of the motor 10 is feedback-controlled to be the command value. For example, the control quantity is a torque. In the respective phases, the upper arm switch SWH and the lower arm switch SWL are alternately controlled to be ON. With this feedback control, a rotational force of the rotor is transmitted to the driving wheels, thereby causing the vehicle to travel.

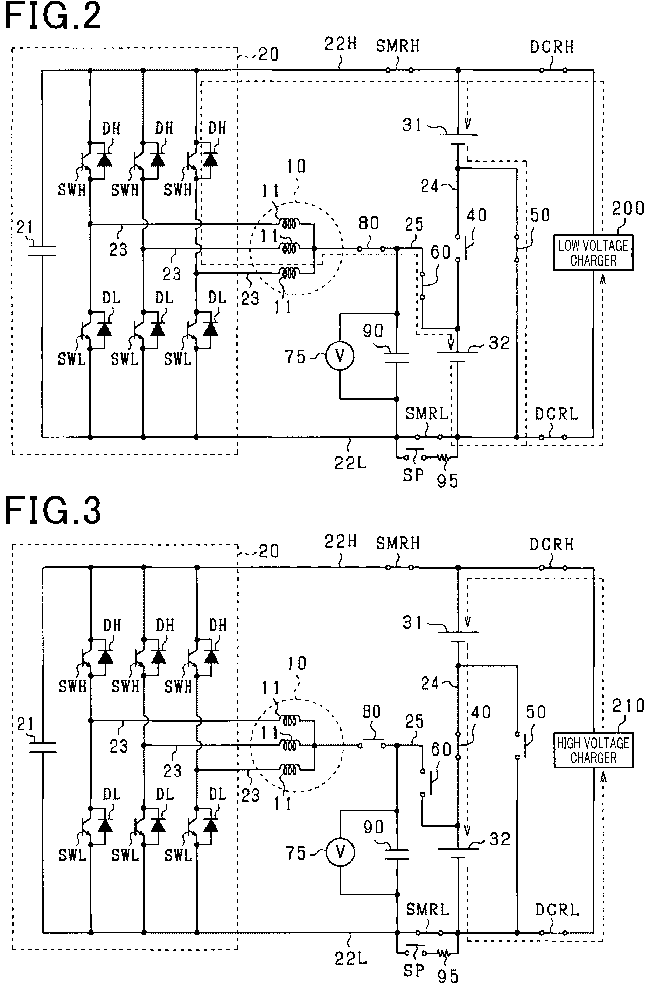

The positive electrode side connection part of the high voltage side electrical path 22H and the negative electrode side connection part of the low voltage side electrical path 22L serve as an interface for connecting the external charger. According to the present embodiment, the external charger is a low voltage charger 200 or a high voltage charger 210 (see Figs.2 to 4). The charge voltage of the low voltage charger 200 is lower than the terminal voltage (i.e. rated voltage) of the series-connected bodies of the first and second storage batteries 31 and 32, for example 400 volts.

The charge voltage of the high voltage charger 210 is higher than the rated voltage of the series-connected bodies of the first and second storage batteries 31 and 32, for example 800 volts. For example, in the case where the user or the operator connects the charger to the respective connection parts and the external charger charges the first and second storage batteries 31 and 32, the high voltage side charge switch DCRH and the low voltage side charge switch DCRL are controlled to be in an ON state by the control apparatus 100.

On the other hand, in the case where charging by the external charger is not performed or the external charger is not connected, the high voltage side charge switch DCRH and the low voltage side charge switch DCRL are switched to be in an OFF state. In the case where the positive electrode side connection part and the negative electrode side connection part are exposed from a casing of the power conversion apparatus, the positive electrode side connection part and the negative electrode side connection part may be touched by the user or the operator. Accordingly, the positive voltage side charge switch DCRH and the low voltage side charge switch DCRL are controlled to be OFF, thereby preventing the user or the operator from suffering an electric shock.

At a portion of the motor side electrical path 25 between the motor side switch 60 and the connection switch 80, the low voltage side electrical path 22L is connected via a neutral point side capacitor 90. For the neutral point capacitor 90, a NC voltage sensor 75 that detects a voltage of the neutral point capacitor 90 is provided. The reason why the neutral point capacitor 90 is provided between the motor side electrical path 25 and the low voltage side electrical path 22L is as follows. In a charging process when the external charger is connected, a high frequency current is produced due to the switching operation. In this respect, a neutral point capacitor 90 is provided in order to prevent the high frequency current due to the switching operation from flowing from the inverter 20 side to the first and second storage batteries 31 and 32 and the external charger.

A series-connected body composed of a pre-charge switch SP and a resistor 95 is connected in parallel to the low voltage side main switch SMRL. The pre-charge switch SP is used for a pre-charge process that charges the smoothing capacitor 21 or the neutral point capacitor 90 during an activation of the power conversion apparatus, for example.

Next, with reference to Figs.2 to 4, a ON-OFF state of respective switches when the system is connected to the external charger and charging operation is performed, will be described. Note that illustration of the control apparatus 100 and the SC voltage sensor 19 in Fig.2 and latter drawings are omitted.

Fig.2 shows a ON-OFF state of respective switches when the external charger connected to the respective connection parts of respective electrical paths 22H and 22L is a low voltage charger 200. As shown in Fig.2, in the case where the low voltage charger 200 is connected, the control apparatus 100 controls the main switch SMRH, SMRL, the battery interconnection switch 40, the negative terminal connection bypass switch 50, the motor side switch 60, the connection switch 80 and upper and lower arm switches SWH and SWL of the inverter 20 such that the first storage battery 31 is connected in parallel to the low voltage charger 200 and the second storage battery 32 is connected in parallel to the low voltage charger 200 via the inverter 20 and the armature winding 11.

Specifically, the control apparatus 100 controls the main switch SMRH, SMRL, the negative terminal connection bypass switch 50, the motor side switch 60 and the connection switch 80 to be ON and controls the battery interconnection switch 40 to be OFF. Further, the control apparatus 100 controls the lower arm switches SWL corresponding to all phases of the inverter 20 to be OFF and repeats to control upper arm switch SWH of at least one phase to be ON and OFF. Thus, as shown in Fig.2, the first storage battery 31 is connected in parallel to the low voltage charger 200 and the second storage battery 32 is connected in parallel to the low voltage charger 200 via the inverter 20 and the armature winding 11. Hence, current flows through a closed circuit including the low voltage charger 200, the high voltage side electrical path 22H, the first storage battery 31, the negative terminal connection bypass switch 50 and the low voltage side electrical path 22L, thereby charging the first storage battery 31. Further, current flow through a closed circuit including the low voltage charger 200, the high voltage side electrical path 22H, the upper arm switch SWH, the armature winding 11, the neutral point, the connection switch 80, the motor side switch 60, the second storage battery 32 and the low voltage side electrical path 22L, thereby charging the second storage battery 32 with a voltage being stepped down. In the case where the upper arm switches SWH of a plurality phases are controlled to be ON, the impedance of the charging path can be lowered. According to the present embodiment, a charging mode with a switching state shown in Fig.2 is referred to as a parallel mode.

Fig.3 shows an ON-OFF state of respective switches in the case where the external charger connected to the respective connection parts of the respective electrical paths 22H and 22L is a high voltage charger 210. As shown in Fig.3, the control apparatus 100 controls, when the high voltage charger 210 is connected, the main switch SMRH, SMRL, the battery interconnection switch 40, the negative terminal connection bypass switch 50, the motor side switch 60, the connection switch 80 and upper and lower arm switches SWH and SWL of the inverter 20 such that the first storage voltage 31 and the second storage battery 32 are series-connected to the high voltage charger 210.

Specifically, the control apparatus 100 controls the main switches SMRH and SMRL and the battery interconnection switch 40 to be ON and controls the negative terminal connection bypass switch 50, the motor side switch 60, the connection switch 80 and upper and lower arm switches SWH and SWL corresponding to all phases of the inverter 20 to be OFF. Thus, as shown in Fig.3, the first storage voltage 31 and the second storage battery 32 are series-connected to the high voltage charger 210. Hence, current flows through a closed circuit including the high voltage charger 210, the high voltage side electrical path 22H, the first storage battery 31, the battery interconnection switch 40, the second storage battery 32 and the low voltage side electrical path 22L, thereby charging the first storage battery 31 and the second storage battery 32 as being connected in series. At this moment, since the upper arm switch SWH of the inverter 20, the connection switch 80 and the motor side switch 60 are controlled to be OFF, the charge current of the high voltage charger 210 can be prevented from flowing through the inverter 20 and the armature winding 11. According to the present embodiment, a charging mode with a switching state shown in Fig.3 is referred to as a series mode.

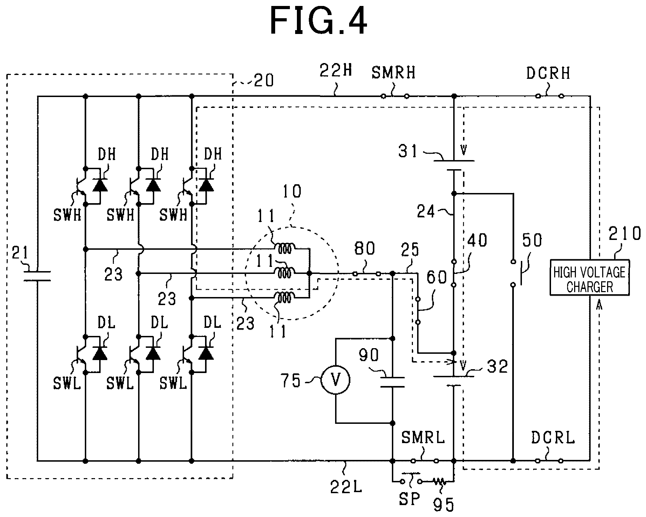

Similar to Fig.3, Fig.4 shows an ON-OFF state of respective switches in the case where the external charger connected to the respective connection parts of the respective electrical paths 22H and 22L is a high voltage charger 210. Although, the state where the first storage battery 31 and the second storage battery 32 are series-connected to the high voltage charger 210, is the same as that shown in Fig.3, according to Fig.4, a ON-OFF state of respective switches are different from those shown in Fig.3.

In Fig.4, the control apparatus 100 controls the main switches SMRH and SMRL and the battery interconnection switch 40, the motor side switch 60 and the connection switch 80 to be ON, and controls the negative terminal connection bypass switch 50 to be OFF. Thus, as shown in Fig.4, the first storage battery 31 and the second storage battery 32 are series-connected to the high voltage charger 210. Thus, current flows through a closed circuit including the high voltage charger 210, the high voltage side electrical path 22H, the first storage battery 31, the battery interconnection switch 40, the second storage battery 32 and the low voltage electrical path 22L. Further, the control apparatus 100 controls the upper and lower arm switches SWH and SWL of the inverter to be alternately ON. Thus, current flow through a closed circuit including the high voltage charger 210, the high voltage side electrical path 22H, the upper arm switch SWH, the armature winding 11, the neutral point, the connection switch 80, the motor side switch 60, the second storage battery 32 and the low voltage side electrical path 22L, thereby charging the second storage battery 32. According to the present embodiment, a charging mode with a switching state shown in Fig.4 is referred to as a series-neutral point mode.

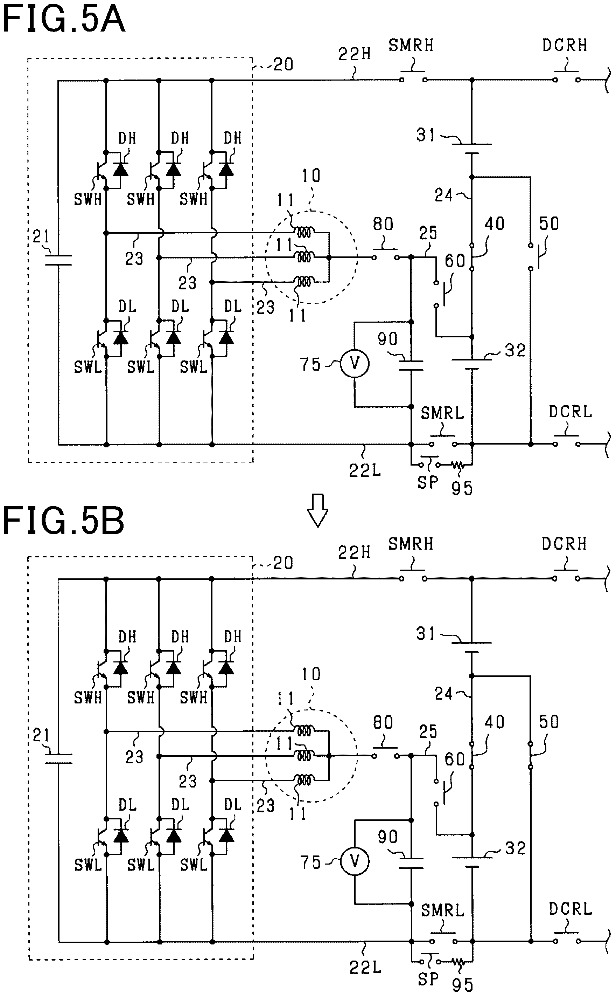

Subsequently, with reference to Fig.5 (a) and (b), a case will be described in which either one switch between the battery interconnection switch 40 and the negative terminal connection bypass switch 50 is in a stuck-ON state. Note that stuck-ON state refers to one of failure modes of switch in which a contact point of the switch is stuck in a connected state (ON state). For example, in the case where the switch is a mechanical switch having contact points, the contact points may become welded when an arc occurs due to opening or closing of contact points or current exceeding the rated value flows through the contact points. In this case, the switch is stuck in an ON state regardless of control by the control apparatus 100.

In Fig.5 (a), the system is not connected to the external charger and the respective switches are in an OFF state. However, the battery interconnection switch 40 is stuck in an ON state and cannot be an OFF state even when an OFF command is received from the control apparatus 100. In this state, when the low voltage charger 200 is connected for example, as described with reference to Fig.2, the negative terminal connection bypass switch 50 is controlled to be ON. At this moment, since the battery interconnection switch 40 is stuck in an ON state, as shown in Fig.5 (b), a short-circuit current flows through a closed circuit including the battery interconnection switch 40, the negative terminal connection bypass switch 50 and the second storage battery 32.

With reference to Fig.5 (a) to (b), a case is described in which the battery interconnection switch 40 is stuck in an ON state. However, similar applies to a case in which the negative terminal connection bypass switch 50 not the battery interconnection switch 40 is stuck-ON state. That is, in the case where the negative terminal connection bypass switch 50 is stuck-ON state, if the high voltage charger 210 is connected for example, as described with reference to Figs. 3 and 4, the battery interconnection switch 40 is controlled to be ON. Thus, current flows through a closed circuit including the battery interconnection switch 40, the negative terminal connection bypass switch 50 and the second storage battery 32. Therefore, since either the battery interconnection switch 40 or the negative terminal connection bypass switch 50 is controlled to be ON during the charging with either the parallel mode or the series mode or the series-neutral point mode, the battery interconnection switch 40 and the negative terminal connection bypass switch 50 are required to be detected whether they are stuck-ON state.

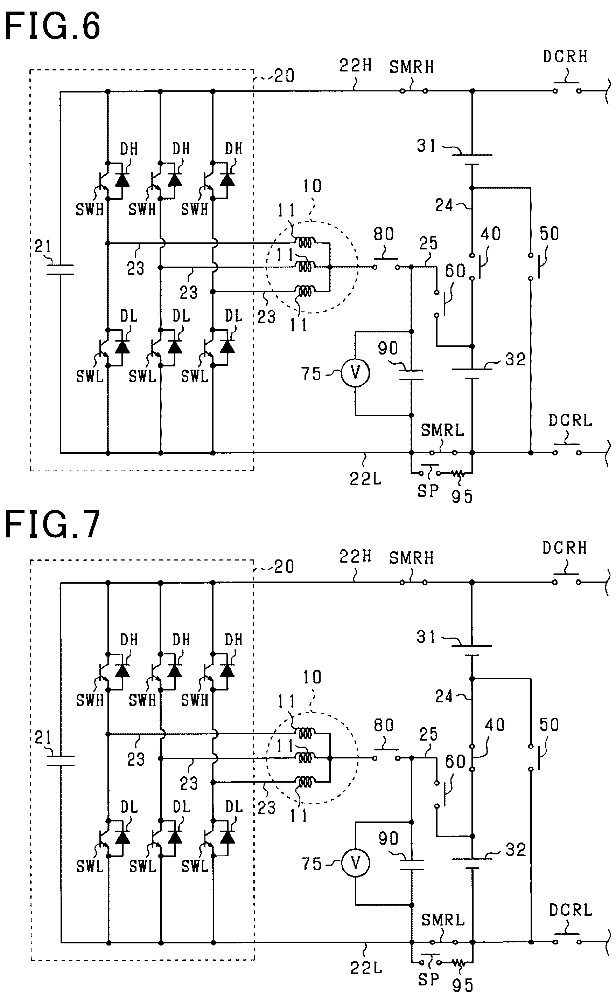

Next, with reference to Figs.6 to 8, an example of determination method of stuck-ON state will be described. Here, a method for detecting stuck-ON state using a voltage of the smoothing capacitor 21 will be described. Hereinafter, the voltage of the smoothing capacitor 21 detected by the SC voltage sensor 19 is referred to as voltage Vinv. Figs.6 to 8 illustrate ON-OFF states of respective switches during an activation of the power conversion apparatus, that is, before starting the charging. As shown in Fig.6, when activating the power conversion apparatus, the high voltage side main switch SMRH and the low voltage side main switch SMRL are controlled to be ON. Note that a pre-charge switch SP may be controlled to be ON instead of the low voltage side main switch SMRL. In other words, a low voltage side switch provided between the lower arm switch and the negative terminal of the second storage unit on the low voltage side electrical path, includes the low voltage side main switch SMRL and the pre-charge switch SP.

The battery interconnection switch 40, the negative terminal connection bypass switch 50, the motor side switch 60 and the connection switch 80 are in an OFF state. Since the battery interconnection switch 40 and the negative terminal connection bypass switch 50 are in an OFF state, current does not flow through the smoothing capacitor 21. Hence, the voltage Vinv of the smoothing capacitor 21 is 0V. The control apparatus 100 detects, during an activation of the power conversion apparatus, that the battery interconnection switch 40 and the negative terminal connection bypass switch 50 are not stuck in an ON state when determining that the voltage Vinv of the smoothing capacitor 21 equals 0V in response to a turn ON of the main switch SMRH and SMRL.

Similar to Fig.6, Fig.7 shows a case where the main switch SMRH and SMRL are controlled to be ON during an activation of the power conversion apparatus. Fig.7 differs from Fig.6 in that the battery interconnection switch 40 is stuck-ON state. In this case, the first storage battery 31 and the second storage battery 32 are connected in series. Thus, current flows through a closed circuit including the second storage battery 32, the battery interconnection switch 40, the first storage battery 31, the high voltage side electrical path 22H and the low voltage side electrical path 22L, and the voltage Vinv of the smoothing capacitor 21 becomes 600V which is a total voltage of a voltage of the first storage battery 31 and a voltage of the second storage battery 32. During activation of the power conversion apparatus, the control apparatus 100 detects that the battery interconnection switch 40 is stuck ON in response to a determination that the voltage Vinv of the smoothing capacitor 21 when controlling the main switches SMRH and SMRL to be ON equals the total voltage of a voltage of the first storage battery 31 and a voltage of the second storage battery 32.

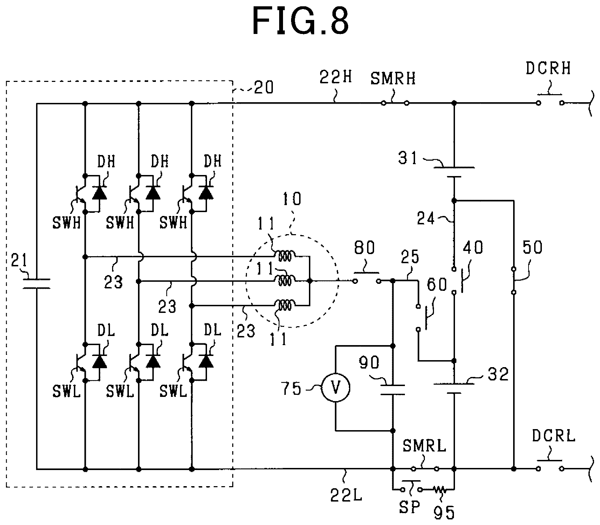

Similar to Fig.6, Fig.8 shows a case where the main switch SMRH and SMRL are controlled to be ON during an activation of the power conversion apparatus. Fig.8 differs from Fig.6 in that the negative terminal connection bypass switch 50 is stuck-ON state. In this case, current flows through a closed circuit including the negative terminal connection bypass switch 50, the first storage battery 31, the high voltage side electrical path 22H, the smoothing capacitor 21 and the low voltage side electrical path 22L, and the voltage Vinv of the smoothing capacitor 21 becomes 400V which is the same as that of the first storage battery 31. During activation of the power conversion apparatus, the control apparatus 100 detects that the negative terminal connection bypass switch 50 is stuck-ON in response to a determination that the voltage Vinv of the smoothing capacitor 21 when controlling the main switches SMRH and SMRL to be ON equals a voltage of the first storage battery 31.

Next, with reference to a flowchart shown in Fig.9, an operation example of the control apparatus 100 will be described. The initial state of each switch at the start of the flowchart is a state where an OFF command from the control apparatus 100 is received. At step S101, the control apparatus 100 selects a charging mode. The charging mode may be selected depending on a type of the external charger connected to the system for example.

At step S102, the control apparatus 100 controls the main switches SMRH and SMRL to be ON to acquire the voltage Vinv of the smoothing capacitor 21 detected by the SC voltage sensor 19. In the case where the control apparatus 100 detects that the voltage Vinv of the smoothing capacitor 21 equals 0V, that is, the determination at step S103 is YES, the process proceeds to step S104. At step S104, the control apparatus 100 detects that the battery interconnection switch 40 and the negative terminal bypass switch 50 are not stuck-ON. The process proceeds to step S105, and the control apparatus 100 changes the ON-OFF state of respective switches depending on the charging mode. Thus, the charging operation starts.

On the other hand, when the determination at step S103 is NO, the process proceeds to step S106. When the control apparatus detects that the voltage Vinv of the smoothing capacitor 21 equals a total voltage (600V) of a voltage of the first storage battery 31 and a voltage of the second storage battery 32, that is, the determination at step S106 is YES, the process proceeds to step S107. At step S107, the control apparatus 100 detects that the battery interconnection switch 40 is stuck-ON. Then, the process proceeds to step S108 and the control apparatus 100 stops the charging operation.

When the determination at step S106 is NO, the process proceeds to step S109. In the case where the control apparatus 100 detects that the voltage Vinv of the smoothing capacitor 21 equals the voltage of the first storage battery 31 (400V), that is, the determination at step S109 is YES, the process proceeds to step S110. At step S110, the control apparatus 100 detects that the negative terminal bypass switch 50 is stuck-ON. Thereafter, the process proceeds to step S108. When the determination at step S109 is NO, since it is possible that an unexpected event has occurred, the process proceeds to step S108.

According to the above-described first embodiment, the following effects and advantages can be obtained.

The control apparatus 100 detects, before controlling one switch between the battery interconnection switch 40 and the negative terminal bypass switch 50 to be ON, whether the other switch between the battery interconnection switch 40 and the negative terminal bypass switch 50 is stuck-ON. In the case where one switch is detected to be stuck-ON, the other switch is not required to be ON. Hence, as described with reference to Fig.5, current can be prevented from flowing through the closed circuit including the battery interconnection switch 40, the negative terminal bypass switch 50 and the second storage battery 32.

In an activation of the power conversion apparatus, the control apparatus 100 controls the main switches SMRH and SMRL to be ON before the charging start. Then, the control apparatus 100 detects, based on the voltage Vinv of the smoothing capacitor 21 at this moment, whether the battery interconnection switch 40 or the negative terminal bypass switch 50 is stuck-ON. According to the present configuration, without actually controlling the battery interconnection switch 40 and the negative terminal bypass switch 50 to be ON or OFF, it can be detected whether the battery interconnection switch 40 or the negative terminal bypass switch 50 is in a stuck-ON state.

In the case where the battery interconnection switch 40 or the negative terminal bypass switch 50 is stuck-ON, the voltage of the smoothing capacitor 21 is changed. Hence, focusing on the voltage of the smoothing capacitor 21, the control apparatus 100 is able to detect whether the battery interconnection switch 40 or the negative terminal bypass switch 50 is in a stuck-ON state.

### <Modification example of first embodiment>

The determination whether stuck-ON state is present which is described with reference to Figs.6 to 8 may be performed at a time when terminating the operation of the power conversion apparatus not a time when activating the power conversion apparatus. In the case when terminating the operation of the power conversion apparatus, that is, after completing the charging, the respective switches are controlled to be OFF. Hence, the stuck-ON state can be detected with a method same as that in the activation. However, a charging operation is performed at a time when terminating the operation of the power conversion apparatus, whereby electric charge is remained in the smoothing capacitor 21. Accordingly, in order to detect whether a stuck-ON state is present when terminating the power conversion apparatus, the smoothing capacitor 21 is required to be discharged, thereby setting the voltage of the smoothing capacitor to be 0V. As a method for discharging the smoothing capacitor 21, for example, a method may be utilized in which a d-axis current is caused to flow through the inverter 20 and the motor 10, thereby discharging the smoothing capacitor 21. Note that, since the voltage of the smoothing capacitor 21 when activating the power conversion apparatus is 0V, such a discharging process is not required.

### <Second Embodiment>

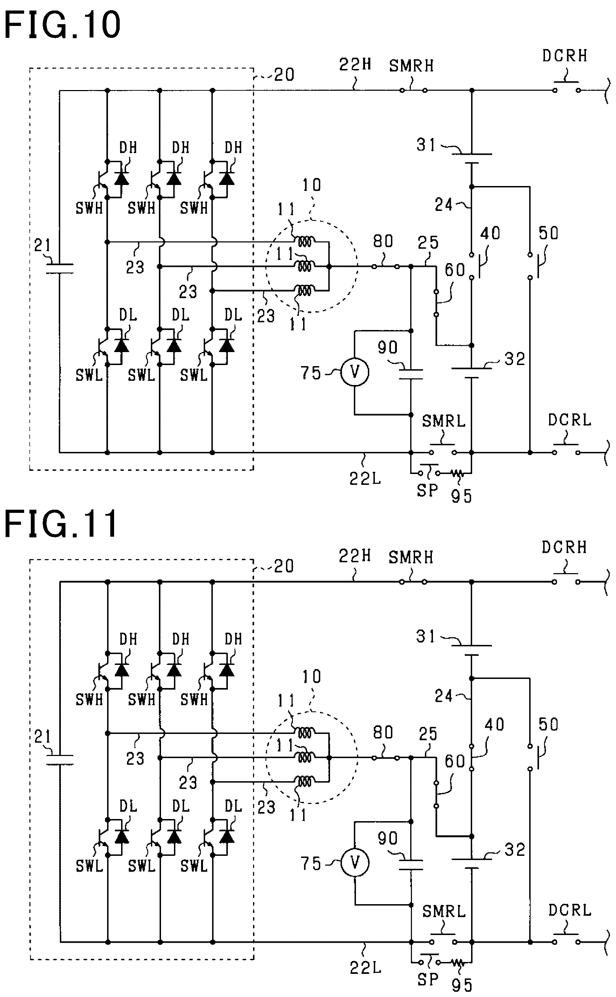

Hereinafter, with reference to Figs.10 to 13, the second embodiment differs from the first embodiment in that switches to be controlled in the activation of the power conversion apparatus are different. For configurations duplicated with the first embodiment, reference symbols are applied and explanation thereof will be omitted. Hereinafter, different configurations will mainly be described.

Fig.10 shows an ON-OFF state of respective switches during activation of the power conversion apparatus. As shown in Fig.10, when activating the power conversion apparatus, the high voltage side main switch SMRH, the motor side switch 60 and the connection switch 80 are controlled to be ON. The battery interconnection switch 40, the negative terminal bypass switch 50 and the low voltage side main switch SMRL are in an OFF state. Since the battery interconnection switch 40 and the negative terminal bypass switch 50 are in an OFF state, current does not flow through the smoothing capacitor 21. Hence, the voltage Vinv of the smoothing capacitor 21 is 0V. During an activation of the power conversion apparatus, when determining that the voltage Vinv of the smoothing capacitor 21 equals 0V in response to a control operation that controls the high voltage side main switch SMRH, the motor side switch 60 and the connection switch 80 to be ON, the control apparatus 100 detects that the battery interconnection switch 40 and the negative terminal bypass switch 50 are not stuck-ON.

Similar to Fig.10, Fig.11 illustrates a state where the high voltage side main switch SMRH, the motor side switch 60 and the connection switch 80 are controlled to be ON, when activating the power conversion apparatus. Fig.11 differs from the Fig.10 in that the battery interconnection switch 40 is stuck-ON. In this case, current flows through a closed circuit including the battery interconnection switch 40, the first storage battery 31, the high voltage side electrical path 22H, the smoothing capacitor 21, the inverter 20, the neutral point of the motor 10, the connection switch 80 and the motor side switch 60, and the voltage Vinv of the smoothing capacitor 21 is 400V which is the same as that of the first storage battery 31. During an activation of the power conversion apparatus, when determining that the voltage Vinv of the smoothing capacitor 21 equals the voltage of the first storage battery 31 in response to a control operation that controls the high voltage side main switch SMRH, the motor side switch 60 and the connection switch 80 to be ON, the control apparatus 100 detects that the battery interconnection switch 40 is stuck ON.

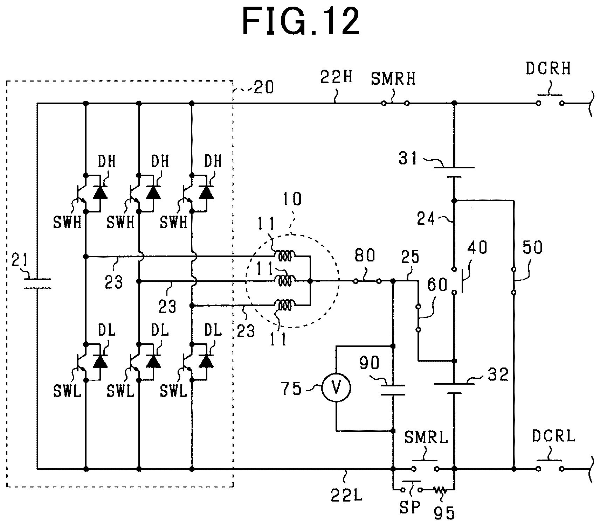

Similar to Fig.10, Fig.12 illustrates a state where the high voltage side main switch SMRH, the motor side switch 60 and the connection switch 80 are controlled to be ON, when activating the power conversion apparatus. Fig.12 differs from the Fig.10 in that the negative terminal bypass switch 50 is stuck ON. In this case, the first storage battery 31 and the second storage battery 32 are connected in parallel. Thus, current flows through the closed circuit including the second storage battery 32, the negative terminal bypass switch 50, the first storage battery 31, the high voltage side electrical path 22H, the smoothing capacitor 21, the inverter 20, the neutral point of the motor 10, the connection switch 80 and the motor side switch 60, and the voltage Vinv of the smoothing capacitor 21 equals a voltage difference between the voltage of the first storage battery 31 and the voltage of the second storage battery 32 (i.e. 200V). During activation of the power conversion apparatus, when determining that the voltage Vinv of the smoothing capacitor 21 equals a voltage difference between the voltage of the first storage battery 31 and the voltage of the second storage battery 32 in response to a control operation that controls the high voltage side main switch SMRH, the motor side switch 60 and the connection switch 80 to be ON, the control apparatus 100 detects that the negative terminal bypass switch 50 is stuck-ON.

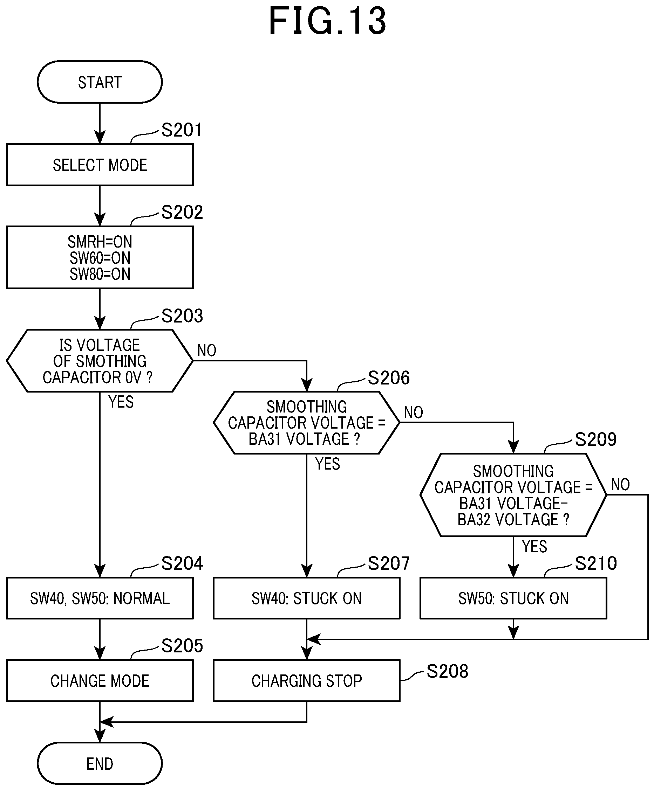

Next, with reference to a flowchart shown in Fig.13, an operation example of the control apparatus 100 will be described. The initial state of each switch at the start of the flowchart is a state where an OFF command from the control apparatus 100 is received. At step S201, the control apparatus 100 selects a charging mode.

At step S202, the control apparatus 100 controls the high voltage side main switch SMRH, the motor side switch 60 and the connection switch 80 to be ON so as to acquire the voltage Vinv of the smoothing capacitor 21. In the case where the control apparatus 100 detects that the voltage Vinv of the smoothing capacitor 21 equals 0V, that is, if the determination at step S203 is YES, the process proceeds to step S204. At step S204, the control apparatus 100 detects that the battery interconnection switch 40 and the negative terminal bypass switch 50 are not stuck-ON. The process proceeds to step S205. At step S205, the control apparatus 100 changes the ON-OFF state of the respective switches based on the charging mode. Thus, a charging operation starts.

On the other hand, if the determination at step S203 is NO, the process proceeds to step S206. In the case where the control apparatus 100 detects that the voltage Vinv of the smoothing capacitor 21 equals the voltage of the first storage battery 31 (i.e. 400V), that is, the determination at step S206 is YES, the process proceeds to step S207. At step S207, the control apparatus 100 detects that the battery interconnection switch 40 is stuck-ON. The process proceeds to step S208 and the control apparatus 100 stops the charging operation.

In the case where the determination at step S206 is NO, the process proceeds to step S209. When the control apparatus 100 detects that the voltage Vinv of the smoothing capacitor 21 equals a voltage difference between the voltage of the first storage battery 31 and the voltage of the second storage battery 32 (i.e. 200V), that is, the determination at step S209 is YES, the process proceeds to step S210. At step S210, the control apparatus 100 detects that the negative terminal bypass switch 50 is stuck-ON. Thereafter, the process proceeds to step S208. In the case where the determination at step S209 is NO, since it is possible that an unexpected event has occurred, the process proceeds to step S208.

According to the second embodiment as described above, the following effects and advantages can be obtained.

During an activation of the power conversion apparatus, the control apparatus 100 controls, before starting the charging operation, the high voltage side main switch SMRH, the motor side switch 60 and the connection switch 80 to be ON. Then, the control apparatus 100 detects, based on the voltage Vinv of the smoothing capacitor 21 at this moment, whether the battery interconnection switch 40 or the negative terminal bypass switch 50 is stuck-ON. According to this configuration, without actually controlling the battery interconnection switch 40 and the negative terminal bypass switch 50 to be ON or OFF, it can be detected whether the battery interconnection switch 40 or the negative terminal bypass switch 50 is in a stuck-ON state.

In the case where the battery interconnection switch 40 or the negative terminal bypass switch 50 is stuck-ON, the voltage of the smoothing capacitor 21 changes. Hence, focusing on the voltage of the smoothing capacitor 21, the control apparatus 100 is able to detect whether the battery interconnection switch 40 or the negative terminal bypass switch 50 is in a stuck-ON state.

### <Modification example of second embodiment>

The determination whether stuck-ON state is present which is described with reference to Figs.10 to 12 may be performed at a time when terminating the operation of the power conversion apparatus not a time when activating the power conversion apparatus. In the case when terminating the operation of the power conversion apparatus, that is, after completing the charging, the respective switches are controlled to be OFF. Hence, the stuck-ON state can be detected with a method same as that during the activation. However, a charging operation is performed when terminating the operation of the power conversion apparatus, whereby electric charge is remained in the smoothing capacitor 21. Accordingly, in order to detect whether a stuck-ON state is present when terminating the power conversion apparatus, the smoothing capacitor 21 is required to be discharged, thereby setting the voltage of the smoothing capacitor to be 0V. The method for discharging the smoothing capacitor 21 is similar to that of the modification example of the first embodiment.

### <Third Embodiment>

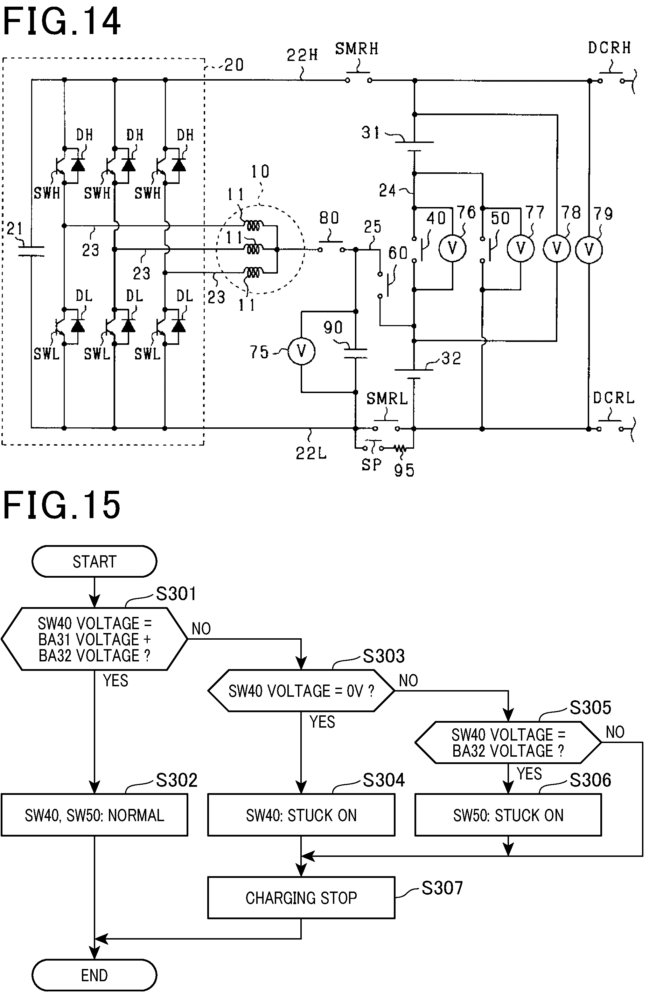

Hereinafter, with reference to Fig.14, a third embodiment will be described. For configurations duplicated with the first embodiment, reference symbols are applied and explanation thereof will be omitted. Hereinafter, different configurations will mainly be described. Fig.14 is a diagram showing a configuration of a power conversion apparatus according to the third embodiment. As shown in Fig.14, the power conversion apparatus is provided with at least one of a battery interconnection switch voltage sensor 76 that detects a voltage across the battery interconnection switch 40, a bypass switch voltage sensor 77 that detects voltage across the negative terminal bypass switch 50, a terminal voltage sensor 78 that detects a terminal voltage which is a voltage between the positive terminal of the first storage battery 31 and the positive terminal of the second storage battery 32, and a PN voltage sensor 79 that detects a PN voltage which is a voltage between the high voltage side electrical path 22H and the low voltage side electrical path 22L.

The control apparatus 100 detects whether the battery interconnection switch 40 or the negative terminal bypass switch 50 is stuck-ON based on at least one of voltage across the battery interconnection switch detected by the battery interconnection switch voltage sensor 76, voltage across the bypass switch voltage detected by the bypass switch voltage sensor 77, the terminal voltage detected by the terminal voltage sensor 78 and the PN voltage detected by the PN voltage sensor 79.

Firstly, a determination method using voltage across the battery interconnection switch 40 will be described with reference to a flowchart shown in Fig.15. At step S301, the control apparatus 100 detects whether the voltage VB across the battery interconnection switch 40 detected by the battery interconnection switch voltage sensor 76 is 600V which is a total voltage of a voltage of the first storage battery 31 and a voltage of the second storage battery 32. According to the present embodiment, in the case where the battery interconnection switch 40 and the negative terminal bypass switch 50 are not stuck-ON (i.e. in an OFF state), the voltage VB across the battery interconnection switch 40 is 600V which is a total voltage of a voltage of the first storage voltage 31 and a voltage of the second storage battery 32. Hence, when the determination at step S301 is YES, the process proceeds to step S302, and the control apparatus 100 detects that the battery interconnection switch 40 and the negative terminal bypass switch are not stuck-ON.

On the other hand, when the determination at step S301 is NO, the process proceeds to step S303. At step S303, the control apparatus 100 detects whether the voltage VB across the battery interconnection switch 40 is 0V. According to the present embodiment, in the case where the battery interconnection switch 40 is stuck-ON, the voltage VB across the battery interconnection switch 40 is 0V. Hence, in the case where the determination at step S303 is YES, the process proceeds to step S304 and the control apparatus 100 detects that the battery interconnection switch 40 is stuck-ON.

When the determination at step S303 is NO, the process proceeds to step S305. At step S305, the control apparatus 100 detects whether the voltage VB across the battery interconnection switch 40 equals the voltage of the second storage voltage (200V). According to the present embodiment, in the case where the negative terminal switch 50 is stuck-ON, the voltage VB across the battery interconnection switch 40 equals the voltage of the second storage battery 32. Hence, when the determination at step S305 is YES, the process proceeds to step S306 and the control apparatus 100 detects that the negative terminal bypass switch 50 is stuck-ON.

After completing the processes at S304 and S306, the process proceeds to step S307 and the control apparatus 100 stops the charging operation. Also, when the determination at step S305 is NO, the process proceeds to step S307.

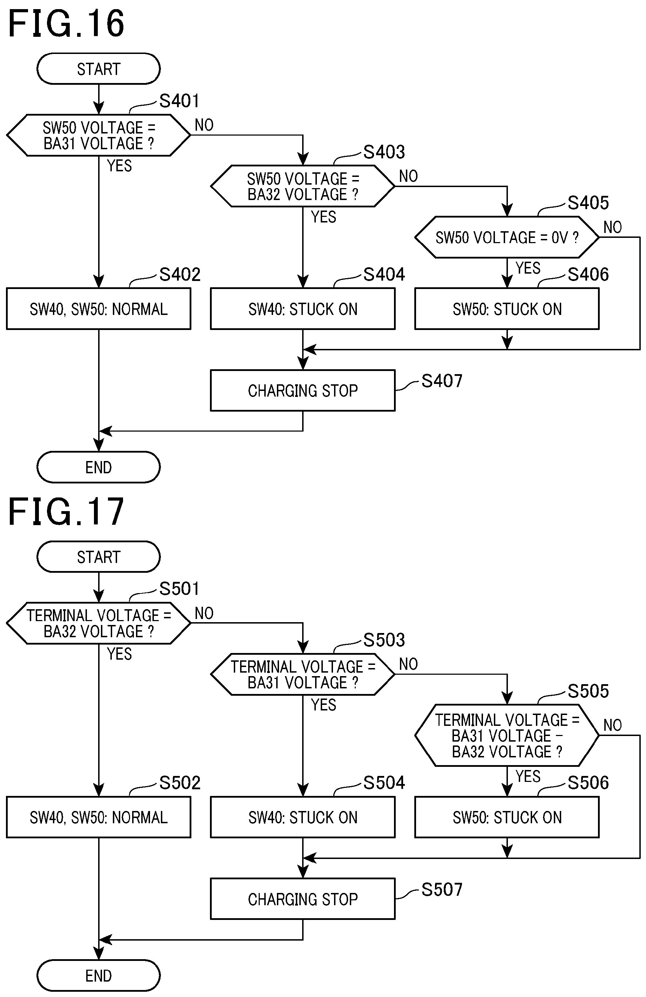

Next, with reference to a flowchart shown in Fig.16, a determination method using the voltage across the negative terminal bypass switch 50 will be described. At step S401, the control apparatus 100 detects whether the voltage VP across the negative terminal bypass switch 50 detected by the bypass switch voltage sensor 77 equals the voltage of the first storage battery 31 (i.e. 400V). According to the present embodiment, in the case where the battery interconnection switch 40 and the negative terminal bypass switch 50 are not stuck-ON but are in an OFF state, the voltage VP across the negative terminal bypass switch 50 equals the voltage of the first storage battery 31. Hence, in the case where the determination at step S401 is YES, the process proceeds to step S402, the control apparatus 100 detects that the battery interconnection switch 40 and the negative terminal bypass switch 50 is not stuck-ON.

On the other hand, when the determination at step S401 is NO, the process proceeds to step S403. At step S403, the control apparatus 100 detects whether the voltage VP across the negative terminal bypass switch 50 equals the voltage of the second storage battery 32 (i.e.200V). According to the present embodiment, in the case where the battery interconnection switch 40 is stuck-ON, the voltage VP across the negative terminal bypass switch 50 equals the voltage of the second storage battery 32. Hence, when the determination at step S403 is YES, the process proceeds to step S404 and the control apparatus 100 detects that the battery interconnection switch 40 is stuck-ON.

In the case where the determination at step S403 is NO, the process proceeds to step S405. At step S405, the control apparatus 100 detects whether the voltage VP across the negative terminal bypass switch 50 is 0V. According to the present embodiment, when the negative terminal bypass switch 50 is stuck-ON, the voltage VP across the negative terminal bypass switch 50 is 0V. Hence, in the case where the determination at step S405 is YES, the process proceeds to step S406 and the control apparatus 100 detects that the negative bypass switch 50 is stuck-ON.

After completing processes at step S404 and step S406, the process proceeds to step S407 and the control apparatus 100 stops the charging operation. Also in the case where the determination at step S405 is NO, the process proceeds to step S407.

Next, with reference to a flowchart shown in Fig. 17, a determination method using terminal voltage will be described. At step S501, the control apparatus 100 detects whether the terminal voltage VT detected by the terminal voltage sensor 78 equals the voltage of the second storage battery 32. According to the present embodiment, in the case where the battery interconnection switch 40 and the negative terminal bypass switch 50 are not stuck-ON (i.e. are in the OFF state), the terminal voltage VT equals that of the second storage battery 32. Hence, in the case where the determination at step S501 is YES, the process proceeds to step S502 and the control apparatus 100 detects that the battery interconnection switch 40 and the negative terminal bypass switch 50 are not stuck-ON.

On the other hand, when the determination at step S501 is NO, the process proceeds to step S503. At step S503, the control apparatus 100 detects whether the terminal voltage VT equals the voltage of the first storage battery 31. According to the present embodiment, in the case where the battery bypass switch 40 is stuck-ON, the terminal voltage VT equals that of the first storage battery 31. Hence, when the determination at step S503 is YES, the process proceeds to step S504 and the control apparatus 100 detects that the battery interconnection switch 40 is stuck-ON.

In the case where the determination at step S503 is NO, the process proceeds to step S505. At step S505, the control apparatus 100 detects whether the terminal voltage VT equals a voltage difference between the voltage of the first storage battery 31 and the voltage of the second storage battery 32. According to the present embodiment, in the case where the negative terminal bypass switch 50 is stuck-ON, the terminal voltage VT equals a voltage difference between the voltage of the first storage battery 31 and the voltage of the second storage battery 32. Hence, when the determination at step S505 is YES, the process proceeds to step S506 and the control apparatus 100 detects that the negative terminal bypass switch 50 is stuck-ON.

After completing the processes at steps S504 and S506, the process proceeds to step S507 and the control apparatus 100 stops the charging operation. Also, in the case where the determination at step S505 is NO, the process proceeds to step S507.

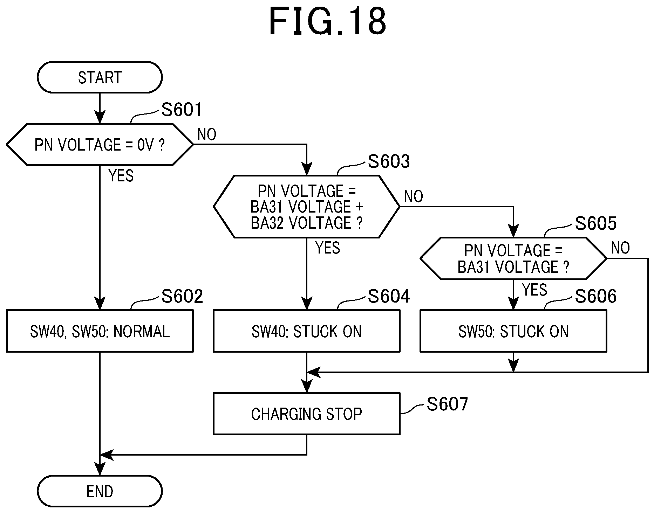

Next, with reference to a flowchart shown in Fig.18, a determination method using PN voltage will be described. At step S601, the control apparatus 100 detects whether the PN voltage VPN detected by the PN voltage sensor 79 is 0V. According to the present embodiment, in the case where the battery interconnection switch 40 and the negative terminal bypass switch 50 are not stuck-ON (i.e. OFF state), the P-N voltage VPN is 0V. Therefore, when the determination at step S601 is YES, the process proceeds to step S602 and the control apparatus 100 detects that the battery interconnection switch 40 and the negative electrode bypass switch 50 are not stuck-ON.

On the other hand, when the determination at step S601 is NO, the process proceeds to step S603. At step S603, the control apparatus 100 detects whether the PN voltage VPN is 600V as a total voltage of a voltage of the first storage battery 31 and a voltage of the second storage battery 32. Accordingly, when the determination at step S603 is YES, the process proceeds to step S604 and the control apparatus 100 detects that the battery interconnection switch 40 is stuck-ON.

In the case where the determination at step S603 is NO, the process proceeds to step S605. At step S605, the control apparatus 100 detects whether the PN voltage VPN equals the voltage of the first storage battery 31 (i.e. 400V). According to the present embodiment, when the negative terminal bypass switch 50 is stuck ON, the PN voltage VPN equals the voltage of the first storage voltage 31. Hence, when the determination at step S605 is YES, the process proceeds to step S606, and the control apparatus 100 detects that the negative terminal bypass switch 50 is stuck ON.

After completing the processes at steps S604 and S606, the process proceeds to step S607 and the control apparatus 100 stops the charging operation. Also, in the case where the determination at step S605 is NO, the process proceeds to step S607.

According to the above-described third embodiment, the following effects and advantages can be obtained.

The control apparatus 100 detects, when activating the power conversion apparatus, whether the battery interconnection switch 40 or the negative terminal bypass switch 50 is stuck ON using any one of voltages detected by the respective voltage sensors 76 to 79 before starting the charging. According to this configuration, it can be detected whether the battery interconnection switch 40 or the negative terminal bypass switch 50 is stuck ON without actually controlling the battery interconnection switch 40 or the negative terminal bypass switch 50 to be ON or OFF.

In the case where the battery interconnection switch 40 or the negative terminal bypass switch 50 is stuck-ON, the voltages detected by the respective voltage sensors 76 to 79 change. Hence, focusing on any one of voltages detected by the respective voltage sensors 76 to 79, it can be detected whether the battery interconnection switch 40 or the negative terminal bypass switch 50 is stuck-ON.

### <Modification of third embodiment>

The determination of stuck-ON state described with reference to Figs.15 to 18 may be performed not only when activating the power conversion apparatus but also when the operation of the power conversion apparatus is terminated. When terminating the power conversion apparatus, that is, after the charging operation is completed, the respective switches are controlled to be OFF. Hence, a stuck-ON state can be detected similar to a determination method when activating the power conversion apparatus.

### <Fourth Embodiment>

Hereinafter, a fourth embodiment will be described. In the foregoing embodiments, it is detected whether the battery interconnection switch 40 and the negative terminal bypass switch 50 are stuck-ON, and the charging operation starts when detecting that the battery interconnection switch 40 and the negative terminal bypass switch 50 are not stuck-ON. However, after detecting that the battery interconnection switch 40 and the negative terminal bypass switch 50 are not stuck-ON, and before starting the charging operation, it may be detected for other switches whether a failure has occurred. Hereinafter, an example of determination method for each of the parallel mode, the series mode and the series-neutral point mode will be described.

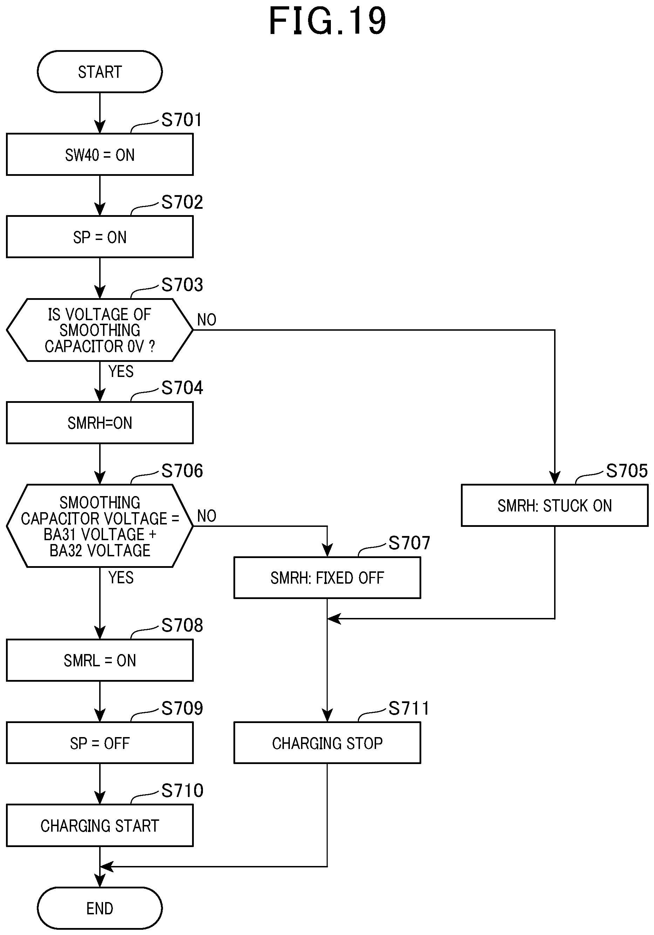

Fig.19 is a flowchart for a series mode. This flowchart is for processes to be executed after detecting that the battery interconnection switch 40 and the negative terminal bypass switch 50 are not stuck-ON.

At step S701, the control apparatus 100 controls the battery interconnection switch 40 to be ON. Subsequently, at step S702, the control apparatus 100 controls the pre-charge switch SP to be ON and acquires the voltage Vinv of the smoothing capacitor 21. In the case where the control apparatus 100 detects that the voltage Vinv of the smoothing capacitor 21 equals 0V, that is, the determination at step S703 is YES, the process proceeds to step S704.

At step S704, the control apparatus 100 controls the high voltage side main switch SMRH to be ON and acquires the voltage Vinv of the smoothing capacitor 21. In the case where the control apparatus 100 detects that the voltage Vinv of the smoothing capacitor 21 is 600V which is a total voltage of a voltage of the first storage battery 31 and a voltage of the second storage battery 32, that is, the determination at step S706 is YES, the process proceeds to step S708. At step S708, the control apparatus 100 controls the low voltage side main switch SMRL to be ON. Subsequently at step S709, the control apparatus 100 controls the pre-charge switch SP to be OFF. At step S710, the control apparatus 100 starts the charging operation.

When the determination at step S703 is NO, the process proceeds to step S705, and the control apparatus 100 detects that the high voltage side main switch SMRH is stuck-ON. The process proceeds to step S711, and the control apparatus 100 stops the charging operation.

In the case where the determination at step S706 is NO, the process proceeds to step S707. Then, the control apparatus 100 detects that the high voltage side main switch SMRH is stuck OFF. A "stuck OFF state" refers to a failure mode in which a contact point of the switch is stuck at non-contact state. Then, the process proceeds to step S711 and the control apparatus 100 stops the charging operation. Note that, the determination at step S706 being NO refers to a state where the high voltage side main switch SMRH is not in an ON state even when the control apparatus transmits the ON command to the high voltage side main switch SMRH, because the high voltage main switch SMRH is in stuck OFF state.

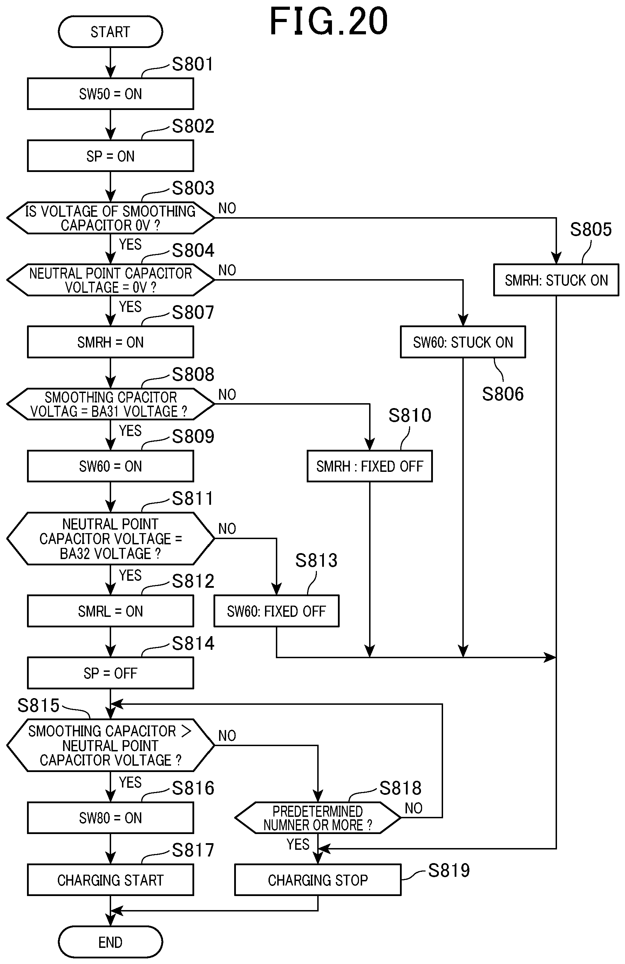

Fig.20 is a flowchart for the parallel mode. This flowchart is for processes to be executed after detecting that the battery interconnection switch 40 and the negative terminal bypass switch 50 is not stuck-ON.

At step S801, the control apparatus 100 controls the negative terminal bypass switch 50 to be ON. At subsequent step S802, the control apparatus 100 controls the pre-charge switch SP to be ON, and acquires the voltage Vinv of the smoothing capacitor 21 and the voltage Vcb of the neutral point capacitor 90 detected by the NC voltage sensor 75. In the case where the control apparatus 100 detects that voltage Vin of the smoothing capacitor 21 equals 0V, that is, the determination at step S803 is YES, the process proceeds to step S804.

In the case where the control apparatus 100 detects that the voltage Vcb of the neutral point capacitor 90 equals 0V, that is, the determination at step S804 is YES, the process proceeds to step S807. At step S807, the control apparatus 100 controls the high voltage side main switch SMRH to be ON and acquires the voltage Vinv of the smoothing capacitor 21. In the case where the control apparatus 100 detects that the voltage Vinv of the smoothing capacitor 21 equals the voltage (i.e. 400V) of the first storage battery 31, that is, the determination at step S808 is YES, the process proceeds to step S809. At step S809, the control apparatus 100 controls the motor side switch 60 to be ON and acquires the voltage Vcb of the neutral point capacitor 90.

In the case where the control apparatus 100 detects that the voltage Vcb of the neutral point capacitor 90 equals the voltage (i.e. 200V) of the second storage battery 32, that is, the determination at step S811 is YES, the process proceeds to step S812. At step S812, the control apparatus 100 controls the low voltage side main switch SMRL to be ON. At subsequent step S814, the control apparatus 100 controls the pre-charge switch SP to be OFF.

At subsequent step S815, the control apparatus 100 detects whether the voltage Vinv of the smoothing capacitor 21 is higher than the voltage Vcb of the neutral point capacitor 90. The reason why such a determination is performed at step S815 is that current likely to flow to the storage battery side from the neutral point capacitor 90 via the upper arm diode DH when the voltage Vcb of the neutral point capacitor 90 is higher than the voltage Vinv of the smoothing capacitor 21. In the case where the determination at step 815 is YES, the process proceeds to step S816. In the case where the determination at step S815 is NO, the process proceeds to step S818, and detects whether the number of occurrences of a state where the voltage Vcb of the neutral point capacitor 90 is higher than the voltage Vinv of the smoothing capacitor, is larger than or equal a predetermined number. When determining that the number of occurrences of a state where the voltage Vcb of the neutral point capacitor 90 is higher than the voltage Vinv of the smoothing capacitor 21, is larger than or equal a predetermined number, that is, the determination at step S818 is YES, the process proceeds to step S819 and the control apparatus 100 stops the charging operation.

At step S816, the control apparatus 100 controls the connection switch 80 to be ON. At subsequent step S817, the control apparatus 100 starts the charging operation.

In the case where the determination at step S803 is NO, the process proceeds to step S805. The control apparatus 100 detects that the high voltage side main switch SMRH is stuck-ON. When the determination at step S804 is NO, the process proceeds to step S806 and the control apparatus 100 detects that the motor side switch 60 is stuck-ON. When the determination at step S808 is NO, the process proceeds to step S810 and the control apparatus 100 detects that the high voltage side main switch SMRH is stuck OFF. In the case where the determination at step S811 is NO, the process proceeds to step S813 and the control apparatus 100 detects that the motor side switch 60 is stuck OFF. After completing the processes of steps S805, S806, S810 and S813, the process proceeds to step S819 and the control apparatus 100 stops charging operation.

The determination at step S808 being NO refers to a case where the high voltage side main switch SMRH is not in an ON state due to a stuck OFF state even when the control apparatus 100 transmits the ON command to the high voltage side main switch SMRH at step S807. Further, the determination at step S811 being NO refers to a case where the motor side switch 60 is not in an ON state due to a stuck OFF state even when the control apparatus 100 transmits the ON command to the motor side main switch 60 at step S809.

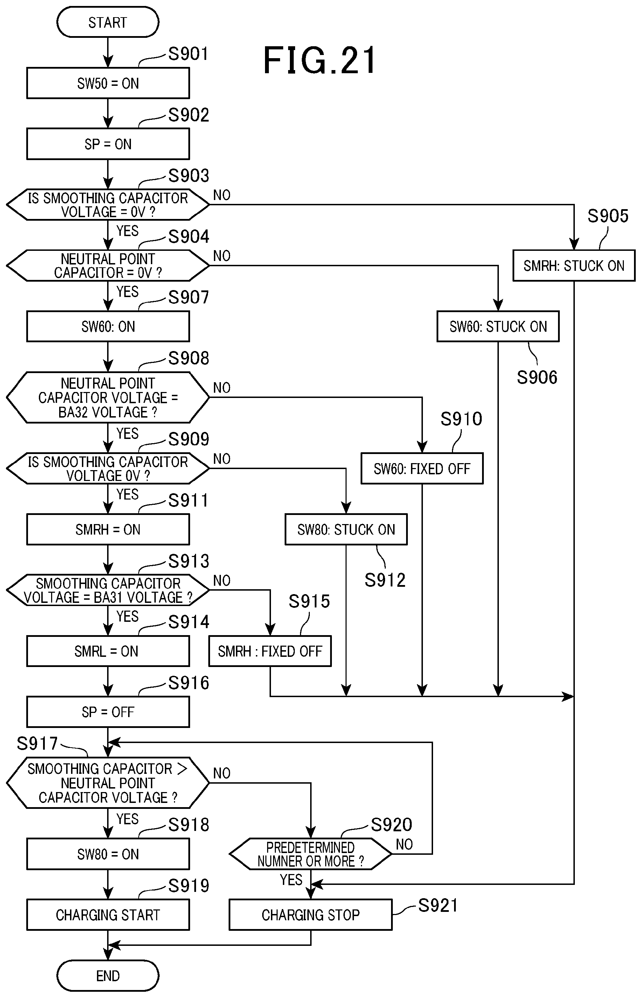

In the flowchart shown in Fig.20, the motor side switch 60 may be controlled to be ON before controlling the high voltage side main switch SMRH to be ON. The flowchart corresponding to this case will be described with reference to Fig.21. However, since processes at steps S901, S902, S903, S904, S905, S906, S914, S916, S917, S918, S919, S920 and S921 shown in Fig.21 are the same as the processes at steps S801, S802, S803, S804, S805, S806, S812, S814, S815, S816, S817, S818 and S819 shown in Fig. 20, the explanation thereof will be omitted.

At step S907, the control apparatus 100 controls the motor side switch 60 to be ON, and acquires the voltage Vinv of the neutral point capacitor 90 and the smoothing capacitor 21. In the case where the control apparatus 100 detects that the voltage Vcb of the neutral point capacitor 90 equals the voltage (i.e. 200V) of the second storage battery 32, that is, the process at step S908 is YES, the process proceeds to step S909.

When the control apparatus 100 detects that the voltage Vinv of the smoothing capacitor 21 equals 0V, that is, the process at step S909 is YES, the process proceeds to step S911. At step S911, the control apparatus 100 controls the high voltage side main switch SMRH to be ON, thereby acquiring the voltage of the smoothing capacitor 21. In the case where the control apparatus 100 detects that the voltage Vinv of the smoothing capacitor 21 equals the voltage (i.e. 400V) of the first storage battery 31, that is, the process at step S913 is YES, the process proceeds to step S914.

In the case where the process at S908 is NO, the process proceeds to step S910 and the control apparatus 100 detects that the motor side switch 60 is stuck OFF. When the determination at step S909 is NO, the process proceeds to step S912 and the control apparatus 100 detects that the connection switch 80 is stuck-ON. When the determination at step S913 is NO, the process proceeds to step S915 and the control apparatus 100 detects that the high voltage side main switch SMRH is stuck OFF.

The determination at step S908 being NO refers to a case where the motor side switch 60 is not in an ON state due to a stuck-ON even when the control apparatus 100 transmits the ON command to the motor side switch 60. Also, the determination at step S913 being NO refers to a case where the high voltage side main switch SMRH is not in an ON state due to a stuck OFF even when the control apparatus 100 transmits the ON command to the high voltage main switch SMRH at step S911.

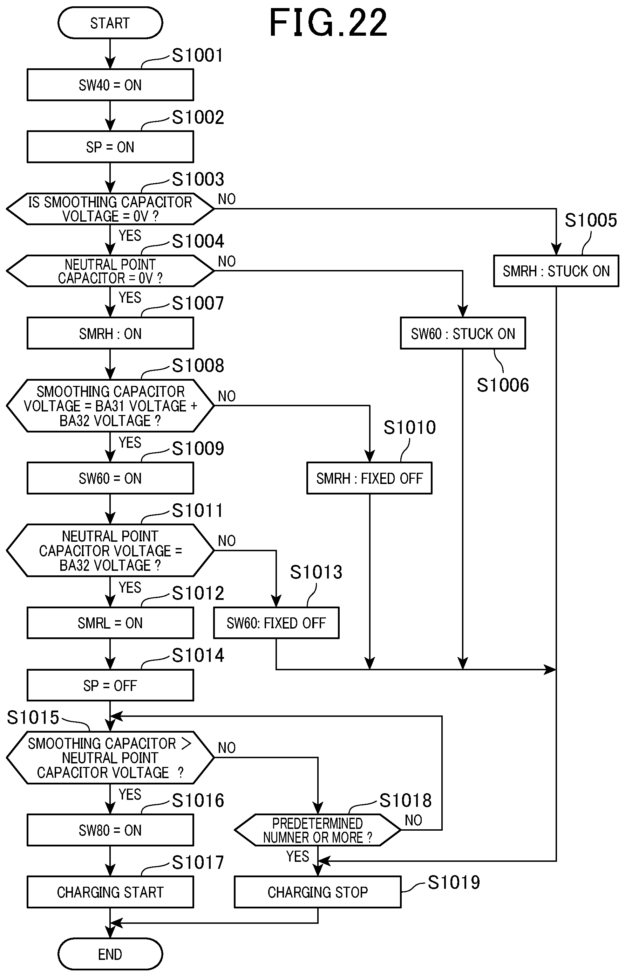

Fig.22 is a flowchart for the series-neutral point mode. This flowchart is executed after detecting that the battery interconnection switch 40 and the negative terminal bypass switch 50 are not stuck-ON.

At step S1001, the control apparatus 100 controls the battery interconnection switch 40 to be ON. At subsequent step S1002, the control apparatus 100 controls the pre-charge switch SP to be ON, and acquires the smoothing capacitor 21 and the voltage Vcb of the neutral capacitor 90. When the control apparatus 100 detects that the voltage Vinv of the smoothing capacitor 21 equals 0V, that is, the determination at step S1003 is YES, the process proceeds to step S1004.

In the case where the control apparatus 110 detects that the voltage Vcb of the neutral point capacitor 90 equals 0V, that is, the determination at step S1004 is YES, the process proceeds to step S1007. At step S1007, the control apparatus 100 controls the high voltage side main switch SMRH to be ON and acquires the voltage Vinv of the smoothing capacitor 21. In the case where the control apparatus 100 detects that the voltage Vinv of the smoothing capacitor 21 equals the total voltage (i.e. 600V) of the voltage of the first storage battery 31 and the voltage of the second storage battery 32, that is, the determination at step S1008 is YES, the process proceeds to step S1009. At step S1009, the control apparatus 100 controls the motor side switch 60 to be ON and acquires the voltage Vcb of the neutral point capacitor 90.

When the control apparatus 100 detects that the voltage Vcb of the neutral point capacitor 90 equals the voltage (i.e. 200V) of the second storage battery 32, that is, the determination at step S1011 is YES, the process proceeds to step S1012. At step S1012, the control apparatus 100 controls the low voltage side main switch SMRL to be ON. At subsequent step S1014, the control apparatus 100 controls the pre-charge switch SP to be OFF.

At subsequent step S1015, the control apparatus 100 detects whether the voltage Vinv of the smoothing capacitor 21 is higher than or equal to the voltage Vcb of the neutral point capacitor 90. In the case where the determination at step S1015 is YES, the process proceeds to step S1016. When the determination at step S1015 is NO, the process proceeds to step S1018 and detects whether the number of occurrences of a state where the voltage Vcb of the neutral point capacitor 90 is higher than the voltage Vinv of the smoothing capacitor 21, is larger than or equal to a predetermined number. When determining that the number of occurrences of a state where the voltage Vcb of the neutral point capacitor 90 is higher than the voltage Vinv of the smoothing capacitor 21, is larger than or equal to a predetermined number, that is, the determination at step S1018 is YES, the process proceeds to step S1019 and the control apparatus 100 stops the charging operation.

At step S1016, the control apparatus 100 controls the connection switch 80 to be ON. At subsequent step S1017, the control apparatus 100 starts charging operation.

When the determination at step S1003 is NO, the process proceeds to step S1005, the control apparatus 100 detects that the high voltage side main switch SMRH is stuck-ON. In the case where the determination at step S1004 is NO, the process proceeds to step S1006 and the control apparatus 100 detects that the motor side switch 60 is stuck-ON. When the determination at step S1008 is NO, the process proceeds to step S1010 and the control apparatus 100 detects that the high voltage side main switch SMRH is stuck-ON. In the case where the determination at step S1011 is NO, the process proceeds to step S1013 and the control apparatus 100 detects that the motor side switch 60 is stuck OFF. After completing processes at step S1005, S1006, S1010, S1012 and S1013, the process proceeds to step S1019 and the control apparatus 100 stops charging.

Note that, the determination at step S1008 being NO refers to a state where the high voltage side main switch SMRH is not in an ON state even when the control apparatus transmits the ON command to the high voltage side main switch SMRH, because the high voltage main switch SMRH is in stuck OFF state. Also, the determination at step S1011 being NO refers to a state where the motor side switch 60 is not in an ON state even when the control apparatus transmits the ON command to the motor side switch 60, because the motor side switch 60 is in stuck OFF state.

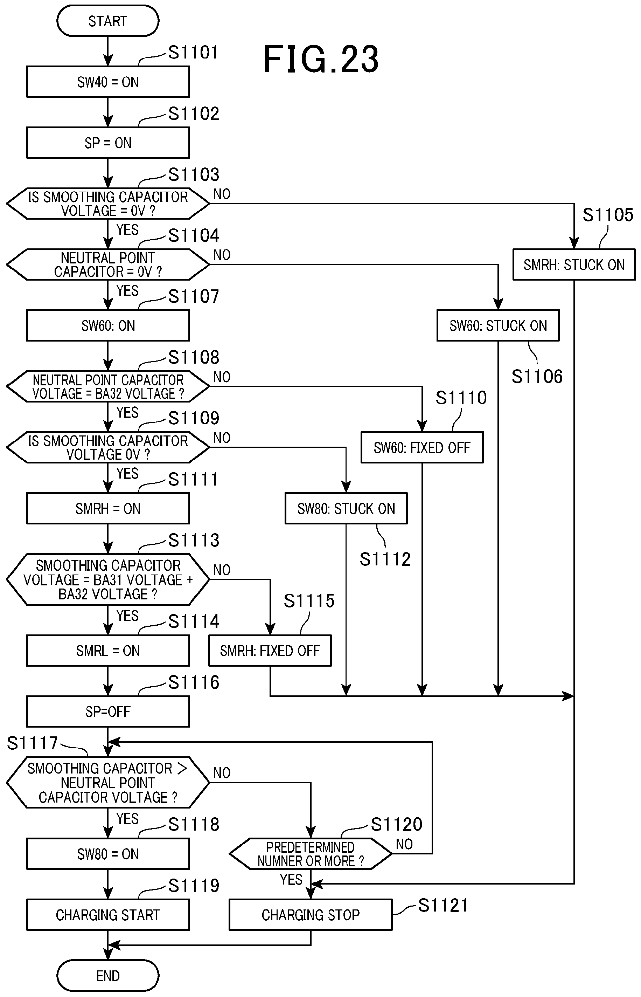

In the flowchart shown in Fig.20, the motor side switch 60 may be controlled to be ON before controlling the high voltage side main switch SMRH to be ON. The flowchart corresponding to this case will be described with reference to Fig.21. However, since processes at steps S1101, S1102, S1103, S1104, S1105, S1106, S1114, S1116, S1117, S1118, S1119, S1120 and S1121 shown in Fig.23 are the same as the processes at steps S1001, S1002, S1003, S1004, S1005, S1006, S1012, S1014, S1015, S1016, S1017, S1018 and S1019 shown in Fig. 22, the explanation thereof will be omitted.

At step S1107, the control apparatus 100 controls the motor side switch 60 to be ON and acquires the voltage Vinv of the neutral point capacitor 90 and the smoothing capacitor 21. In the case where the control apparatus 100 detects that the voltage Vcb of the neutral point capacitor 90 equals the voltage (i.e. 200V) of the second storage battery 32, that is, the determination at step S1108 is YES, the process proceeds to step S1109.

In the case where the control apparatus 100 detects that the voltage Vinv of the smoothing capacitor 21 equals 0V, that is, when the determination at step S1109 is YES, the process proceeds to step S1111. At step S1111, the control apparatus 100 controls the high voltage side main switch SMRH to be ON and acquires the voltage Vinv of the smoothing capacitor 21. In the case where the control apparatus 100 detects that the voltage Vinv of the smoothing capacitor 21 is 600V which is a total voltage of a voltage of the first storage battery 31 and a voltage of the second storage battery 32, that is, the determination at step S1113 is YES, the process proceeds to step S1114.

In the case where the determination at step S1108 is NO, the process proceeds to step S1110, and the control apparatus 100 detects that the motor side switch 60 is stuck OFF. When the determination at step S1109 is NO, the process proceeds to step S1112, and the control apparatus 100 detects that the connection switch 80 is stuck-ON. When the determination at step S1113 is NO, the process proceeds to step S1115 and the control apparatus 100 detects that the high voltage side main switch SMRH is stuck OFF.

The determination at step S1108 being NO refers to a case where the motor side switch 60 is not in the ON state due to a stuck OFF state even when the control apparatus 100 transmits the ON command to the motor side switch 60 at step S1107. Further, the determination at step S1113 being NO refers to a case where the high voltage side main switch SMRH is not in the ON state due to a stuck OFF state even when the control apparatus 100 transmits the ON command to the high voltage side main switch SMRH at step S1111.

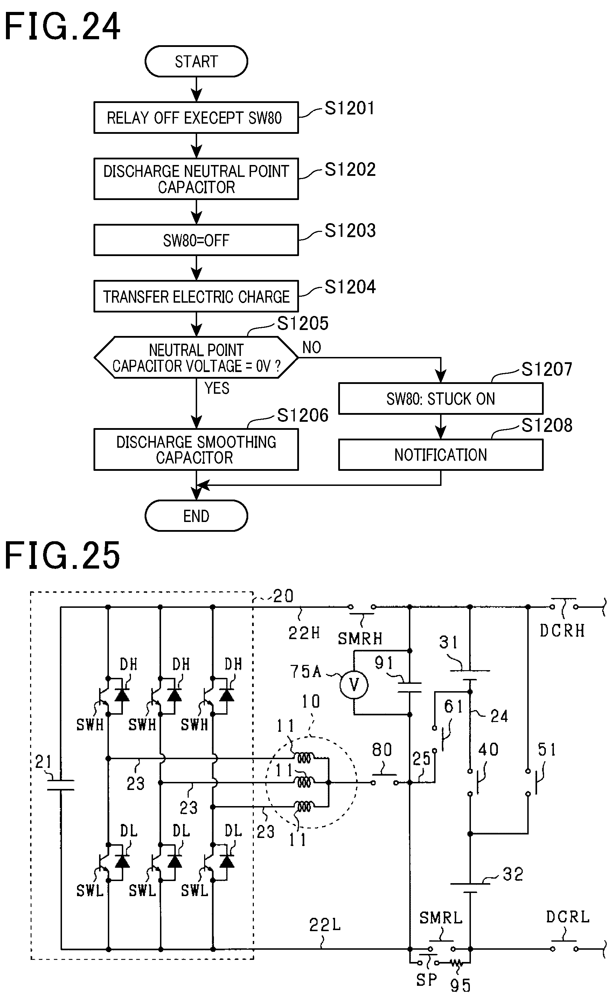

The control apparatus 100 terminates processes of the power conversion apparatus after completing the charging operation. At this time, the processes of the power conversion apparatus may be terminated in accordance with the flowchart shown in Fig.24. The processes of the flowchart shown in Fig.24 is started after completing the charging operation. At step S1201, the control apparatus 100 controls the respective switches except the connection switch 80 to be OFF. At subsequent step S1202, the control apparatus 100 causes the neutral point capacitor 90 to discharge. As a method for discharging the neutral point capacitor 90, causing the inverter 30 to boost the voltage and transferring electric charge in the neutral point capacitor 90 to the smoothing capacitor 21, thereby discharging the neutral point capacitor. After discharging the neutral capacitor 90 such that the voltage of the neutral point capacitor 90 becomes 0V, the process proceeds to step S1203 and the control apparatus 100 controls the connection switch 80 to be OFF.

At step S1204, the control apparatus 100 transfers electric charge from the smoothing capacitor 21 to the neutral point capacitor 90 via the inverter 20 and the motor 10. At this time, when the connection switch 80 is not stuck-ON, the electric charge in the smoothing capacitor 21 is not transferred to the neutral point capacitor 90 and the voltage Vcb of the neutral point capacitor 90 is 0V. In the case where the control apparatus 100 detects that the voltage Vcb of the neutral point capacitor 90 equals 0V, that is, the determination at step S1205 is YES, the process proceeds to step S1206. At step S1206, the control apparatus 100 discharges the smoothing capacitor 21 until the voltage of the smoothing capacitor 21 becomes 0V, thereby terminating processes of the power conversion apparatus.

In the case where the determination at step S1205 is NO, the process proceeds to step S1207, and the control apparatus 100 detects that the connection switch 80 is stuck-ON. Then, the process proceeds to step S1208 and the control apparatus 100 notifies the driver of an occurrence of an abnormality.

The determination at step S1205 being NO refers to a case where the connection switch 80 is not in an OFF state due to a stuck-ON state even when the control apparatus 100 transmits the OFF command to the connection switch 80 at step S1203.

### <Fifth Embodiment>

Hereinafter, for the fifth embodiment, configurations different from those in the first embodiment will mainly be described with reference to the drawings. According to the present embodiment, as shown in Fig.25, the power conversion apparatus is provided with a positive terminal bypass switch 51 that connects between the positive terminal of the second storage battery 32 and the high voltage side electrical path 22H, but is not provided with the negative terminal bypass switch 50 shown in Fig.1. Also, the power conversion apparatus is provided with a neutral point capacitor 91 and a NC voltage sensor 75A that detects the voltage of the neutral point capacitor 91 between the motor side electrical path 25 and the high voltage side electrical path 22H, but is not provided with the neutral point capacitor 90 and the NC voltage sensor 75 shown in Fig.1. Further, the motor side electrical path 25 connects the neutral point of the armature winding 11 and a portion of the battery interconnecting electrical path 24 closely positioned to the first storage battery 31 side relative to the battery interconnection switch 40. Moreover, a motor side switch 61 is provided on the motor side electrical path 25. The voltage of the first storage battery 31 is 200V and the voltage of the second storage battery 32 is 400V.

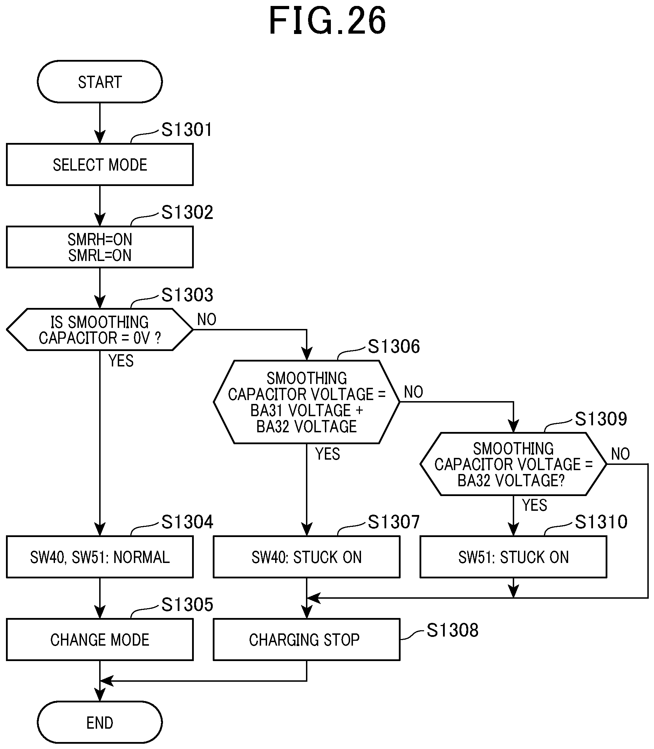

With reference to the flowchart shown in Fig.26, an example of a method for detecting an stuck-ON state of the battery interconnection switch 40 and the positive terminal bypass switch 51 in the circuit configuration shown in Fig.25. The initial state of the respective switches at a start of the flowchart is a state where the OFF command is received from the control apparatus 100. At step S1301, the control apparatus 100 selects the charging mode.

At step S1302, the control apparatus 100 controls the main switches SMRH and the SMRL to be ON and acquires the voltage Vinv of the smoothing capacitor 21. In the case where the control apparatus 100 detects that the voltage Vinv of the smoothing capacitor 21 equals 0V, that is, the determination at step S1303 is YES, the process proceeds to step S1304. At step S1304, the control apparatus 100 detects that the battery interconnection switch 40 and the positive terminal bypass switch 51 is not stuck-ON. The process proceeds to step S1305 and the control apparatus 100 changes the ON-OFF state of the respective switches based on the charging mode. Thus, a charging operation starts.

On the other hand, when the determination at step S1303 is NO, the process proceeds to step S1306. In the case where the control apparatus 100 detects that the voltage Vinv of the smoothing capacitor 21 equals a total voltage (i.e. 600V) of a voltage of the first storage battery 31 and a voltage of the second storage battery 32, that is, the determination at step S1306 is YES, the process proceeds to step S1307. At step S1307, the control apparatus 100 detects that the battery interconnection switch 40 is stuck-ON. Then, the process proceeds to step S1308 and the control apparatus 100 stops the charging operation.

When the determination at step S1306 is NO, the process proceeds to step S1309. In the case where the control apparatus 100 detects that the voltage Vinv of the smoothing capacitor 21 equals the voltage of the second storage battery 32 (i.e. 400V), that is, the determination at step S1309 is YES, the process proceeds to step S1310. At step S1310, the control apparatus 100 detects that the positive terminal bypass switch 51 is stuck-ON. Thereafter, the process proceeds to step S1308. When the determination at step S1309 is NO, since it is possible that an unexpected event has occurred, the process proceeds to step S1308.

According to the above-described fifth embodiment, the following effects and advantages can be obtained.

The control apparatus 100 controls, when activating the power conversion apparatus, the main switches SMRH and SMRL to be ON before starting the charging operation and detects, based on the voltage Vinv of the smoothing capacitor at the moment, whether the battery interconnection switch 40 and the positive terminal bypass switch 51 are stuck-ON. According to the present configuration, without actually controlling the battery interconnection switch 40 and the positive terminal bypass switch 51 to be ON and OFF, it can be detected whether the battery interconnection switch 40 and the positive terminal bypass switch 51 are stuck-ON.

### <Modification example 1 of fifth embodiment>

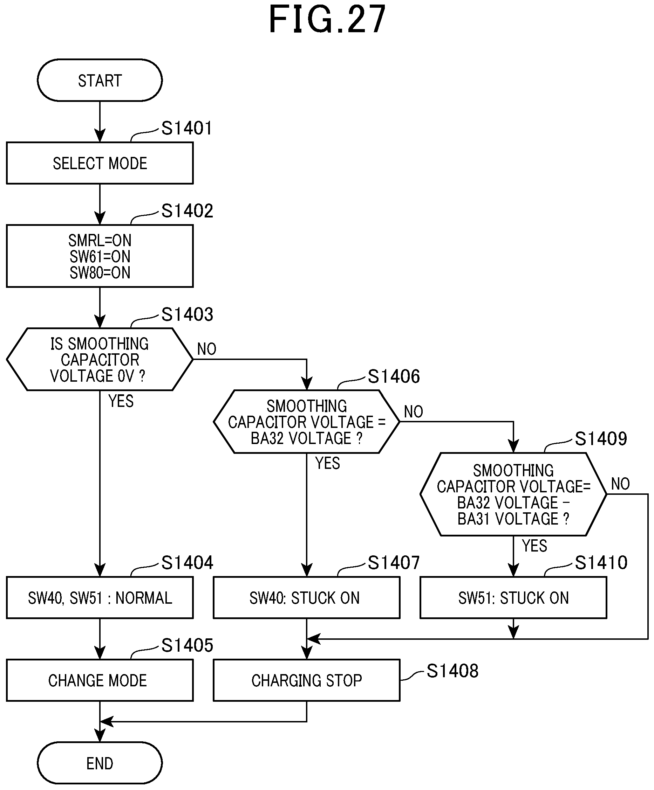

For the determination whether the battery interconnection switch 40 and the positive terminal bypass switch 51 are stuck-ON, the determination may be made in accordance with the flowchart shown in Fig.27. Hereinafter, the flowchart will be described. The initial state of the respective switches at the start of the flowchart is a state where an OFF command from the control apparatus 100 is received.

At step S1401, the control apparatus 100 selects the charging mode. At step S1402, the control apparatus 100 controls the low voltage side main switch SMRL, the motor side switch 61 and the connection switch 80 to be ON and acquires the voltage Vinv of the smoothing capacitor 21. In the case where the control apparatus 100 detects that the voltage Vinv of the smoothing capacitor 21 equals 0V, that is, the determination at step S1403 is YES, the process proceeds to step S1404. At step S1404, the control apparatus 100 detects that the battery interconnection switch 40 and the positive terminal bypass switch 51 are not stuck-ON. Then, the process proceeds to step S1405 and the control apparatus 100 changes the ON-OFF state of respective switches based on the charging mode. Thus, the charging starts.

On the other hand, when the determination at step S1403 is NO, the process proceeds to step S1406. In the case where the control apparatus 100 detects that the voltage Vinv of the smoothing capacitor 21 equals the voltage of the second storage battery 32, that is, the determination at step S1406 is YES, the process proceeds to step S1407. At step S1407, the control apparatus 100 detects that the battery interconnection switch 40 is stuck-ON. The process proceeds to step S1408 and the control apparatus 100 stops the charging.

In the case where the determination at step S1406 is NO, the process proceeds to step S1409. When the control apparatus 100 detects that the voltage Vinv of the smoothing capacitor 21 equals a voltage difference between the voltage of the second storage battery 32 and the voltage of the first storage battery 31, that is, the determination at step S1409 is YES, the process proceeds to step S1410. At step S1410, the control apparatus 100 detects that the positive terminal bypass switch 51 is stuck-ON. Thereafter, the process proceeds to step S1408. Note that, when the determination at step S1409 is NO, since it is possible that unexpected event has occurred, the process proceeds to step S1408.

In the case where the battery interconnection switch 40 or the positive terminal bypass switch 51 are stuck-ON, the voltage at the smoothing capacitor 21 changes. Hence, focusing on the voltage at the smoothing capacitor 21, the control apparatus 100 is able to detect whether the battery interconnection switch 40 or the negative terminal bypass switch 51 is at a stuck-ON state.

The determination of stuck-ON state described with reference to Figs.26 to 27 may be performed when terminating the power conversion apparatus not when activating the power conversion apparatus. When terminating the power conversion apparatus, that is, after completing the charging operation, since the respective switches are controlled to be in an OFF state, a determination whether a stuck-ON state is present can be made by the method same as that during the activation. However, the charging operation is performed when terminating the power conversion apparatus, whereby electric charge is remained in the smoothing capacitor 21. Hence, in order to detect whether a stuck-ON state is present at a time when terminating the power conversion apparatus, it is required to discharge the smoothing capacitor 21, thereby setting the voltage of the smoothing capacitor 21 to be 0V. The method of discharging the smoothing capacitor 21 is the same as that of the modification example of the first embodiment.

### <Sixth Embodiment>

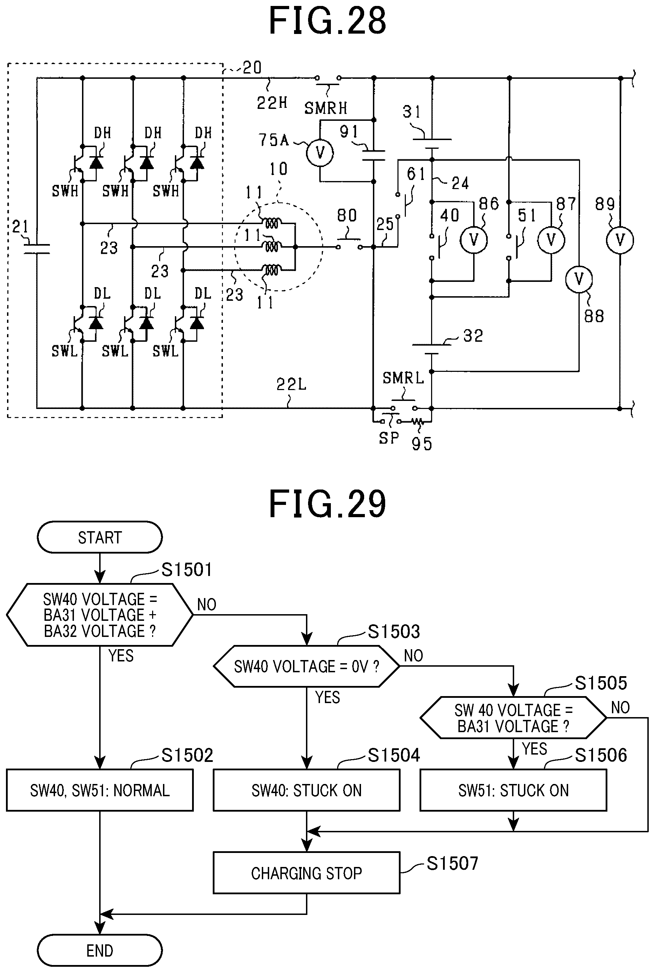

Hereinafter, for the sixth embodiment, configurations different from those in the fifth embodiment will mainly be described with reference to the drawings. As shown in Fig.28, the power conversion apparatus is provided with at least one of a battery interconnection switch voltage sensor 86 that detects a voltage across the battery interconnection switch 40, a bypass switch voltage sensor 87 that detects voltage across the positive terminal bypass switch 51, a terminal voltage sensor 88 that detects a terminal voltage which is a voltage between the negative terminal of the first storage battery 31 and the negative terminal of the second storage battery 32, and a PN voltage sensor 89 that detects PN voltage which is a voltage between the high voltage side electrical path 22H and the low voltage side electrical path 22L.

The control apparatus 100 detects whether the battery interconnection switch 40 or the positive terminal bypass switch 51 is stuck-ON based on at least one of the voltage across the battery interconnection switch detected by the battery interconnection switch voltage sensor 86, the voltage across the bypass switch detected by the bypass switch voltage sensor 87, the terminal voltage detected by the terminal voltage sensor 88 and the PN voltage detected by the PN voltage sensor 89.

Firstly, a determination method using voltage across the battery interconnection switch 40 will be described with reference to the flowchart shown in Fig.19. At step S1501, the control apparatus 100 detects whether a voltage VB2 across the battery interconnection switch 40 detected by the battery interconnection switch voltage sensor 86 equals 600V which is a total voltage of the voltage of the first storage battery 31 and the voltage of the second storage battery 32. According to the present embodiment, in the case where the battery interconnection switch 40 and the positive terminal bypass switch 51 are in an OFF state and not stuck-ON, a voltage VB2 across the battery interconnection switch 40 equals 600V which is the total voltage of the voltage of the first storage battery 31 and the voltage of the second storage battery 32. Hence, when the determination at step S1501 is YES, the process proceeds to step 1502, and the control apparatus 100 detects that the battery interconnection switch 40 and the positive terminal bypass switch 51 are not stuck-ON.

On the other hand, in the case where the determination at step S1501 is NO, the process proceeds to step S1503. At step S1503, the control apparatus 100 detects whether voltage VB2 across the battery interconnection switch 40 is 0V. According to the present embodiment, when the battery interconnection switch 40 is stuck-ON, voltage VB2 across the battery interconnection switch 40 is 0V. Hence, when the determination at step S1503 is YES, the process proceeds to step S1504 and the control apparatus 100 detects that the battery interconnection switch 40 is stuck-ON.

In the case where the determination at step S1503 is NO, the process proceeds to step S1505. At step S1505, the control apparatus 100 detects whether voltage VB2 across the battery interconnection switch 40 equals the voltage (i.e. 200V) of the first storage battery 31. According to the present embodiment, when the positive terminal bypass switch 51 is stuck-ON, voltage VB2 across the battery interconnection switch 40 equals the voltage of the first storage battery 31. Hence, when the determination at step S1505 is YES, the process proceeds to step S1506 and the control apparatus 100 detects that the positive terminal bypass switch 51 is stuck-ON.

After executing processes at steps S1504 and S1506, the process proceeds to step S1507 and the control apparatus 100 stops the charging operation. Note that, when the determination at step S1505 is NO, the process proceeds to step S1507.

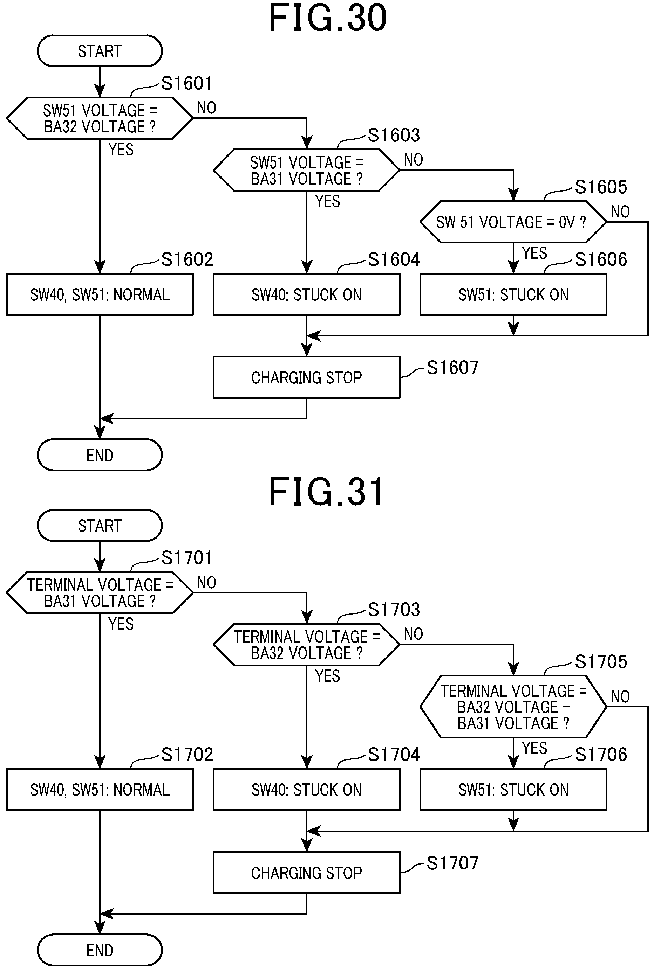

Next, with reference to a flowchart shown in Fig.30, a determination method using voltage across the positive terminal bypass switch 51 will be described. At step S1601, the control apparatus 100 detects whether voltage VP2 across the positive terminal bypass switch 51 detected by the bypass switch voltage sensor 87 equals the voltage (i.e. 400V) of the second storage battery 32. According to the present embodiment, in the case where the battery interconnection switch 40 and the positive terminal bypass switch 51 are not stuck-ON (i.e. in an OFF state), voltage VP2 across the positive terminal bypass switch 51 equals the voltage of the second storage voltage 32. Hence, when the determination at step S1601 is YES, the process proceeds to step S1602 and the control apparatus 100 detects that the battery interconnection switch 40 and the positive terminal bypass switch 51 are not stuck-ON.

On the other hand, when the determination at step S1601 is NO, the process proceeds to step S1603. At step S1603, the control apparatus 100 detects whether voltage VP2 across the positive terminal bypass switch 51 equals the voltage (i.e. 200V) of the first storage battery 31. According to the present embodiment, in the case where the battery interconnection switch 40 is stuck-ON, voltage VP2 across the positive terminal bypass switch 51 equals the voltage of the first storage battery 31. Hence, when the determination at step S1603 is YES, the process proceeds to step S1604, and the control apparatus 100 detects that the battery interconnection switch 40 is stuck-ON.

In the case where the determination at step S1603 is NO, the process proceeds to step S1605. At step S1605, the control apparatus 100 detects whether voltage VP2 across the positive terminal bypass switch 51 is 0V. According to the present embodiment, when the positive terminal bypass switch 51 is stuck-ON, voltage VP2 across the positive terminal bypass switch 51 is 0V. Hence, in the case where the determination at step S1605 is YES, the process proceeds to step S1606 and the control apparatus 100 detects that the positive terminal bypass switch 51 is stuck-ON.

After completing the steps S1604 and S1606, the process proceeds to step S1607, and the control apparatus 100 stops charging. When the determination at step S1605 is NO, the process proceeds to step S1607.

Next, with reference to a flowchart shown in Fig.31, a determination method using a terminal voltage will be described. At step S1701, the control apparatus 100 detects whether the terminal voltage VT2 detected by the terminal voltage sensor 88 equals the voltage of the first storage battery 31. According to the present embodiment, in the case where the battery interconnection switch 40 and the positive terminal switch 51 are not stuck-ON (i.e. in an OFF state), the terminal voltage VT2 equals the voltage of the first storage battery 31. Hence, when the determination at step S1701 is YES, the process proceeds to step S1702 and the control apparatus 100 detects that the battery interconnection switch 40 and the positive terminal bypass switch 51 are not stuck-ON.

On the other hand, in the case where the determination at step S1701 is NO, the process proceeds to step S1703. At step S1703, the control apparatus 100 detects whether the terminal voltage VT2 equals the voltage of the second storage battery 32. According to the present embodiment, when the battery interconnection switch 40 is stuck-ON, the terminal voltage VT2 equals the voltage of the second storage battery 32. Hence, when the determination at step S1703 is YES, the process proceeds to step S1704, and the control apparatus 100 detects that the battery interconnection switch 40 is stuck-ON.

In the case where the determination at step S1703 is NO, the process proceeds to step S1705. At step S1705, the control apparatus 100 detects whether the terminal voltage VT2 equals a voltage difference between the voltage of the second storage battery 32 and the voltage of the first storage battery 31. According to the present embodiment, in the case where the positive terminal bypass switch 51 is stuck-ON, the terminal voltage VT2 equals a voltage difference between the voltage of the first storage battery 31 and the voltage of the second storage battery 32. Hence, when the determination at step S1705 is YES, the process proceeds to step S1706 and the control apparatus 100 detects that the positive terminal bypass switch 51 is stuck-ON.

After completing the steps S1704 and S1706, the process proceeds to step S1707 and the control apparatus 100 stops charging operation. Note that, also in the case where the determination at step S1705 is NO, the process proceeds to step S1707.

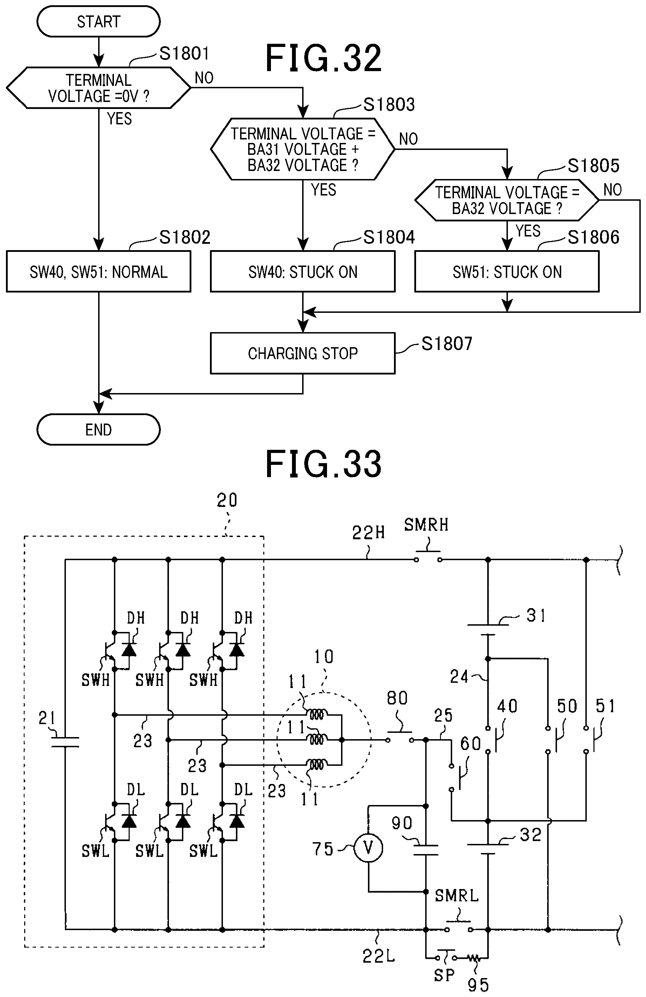

Next, with reference to a flowchart shown in Fig.32, a determination method using a PN voltage will be described. At step S1801, the control apparatus 100 detects whether the PN voltage VPN2 detected by the PN voltage sensor 89 is 0V. According to the present embodiment, in the case where the battery interconnection switch 40 and the positive terminal bypass switch 51 are not stuck-ON (i.e. in an OFF state), the PN voltage VPN2 is 0V. Hence, when the determination at step 1801 is YES, the process proceeds to step S1802 and the control apparatus 100 detects that the battery interconnection switch 40 and the positive terminal bypass switch 51 are not stuck-ON.

On the other hand, in the case where the determination at step S1801 is NO, the process proceeds to step S1803. At step S1803, the control apparatus 100 detects whether the PN voltage VPN2 is 600V which is the total voltage of the voltage of the first storage battery 31 and the voltage of the second storage battery 32. According to the present embodiment, when the battery interconnection switch 40 is stuck-ON, the PN voltage VPN2 is 600V which is the total of voltage of the first storage battery 31 and the voltage of the second storage battery 32. Hence, when the determination at step S1803 is YES, the process proceeds to step S1804 and the control apparatus 100 detects that the battery interconnection switch 40 is stuck-ON.

In the case where the determination at step S1803 is NO, the process proceeds to step S1805. At step S1805, the control apparatus 100 detects whether the PN voltage VPN2 equals the volage (i.e. 400V). According to the present embodiment, when the positive terminal bypass switch 51 is stuck-ON, the PN voltage VPN2 equals the voltage of the second storage battery 32. Hence, when the determination at step S1805 is YES, the process proceeds to step S1806 and the control apparatus 100 detects that the positive terminal bypass switch 51 is stuck-ON.

After completing steps S1804 and S1806, the process proceeds to step S1807 and the control apparatus 100 stops charging operation. Note that, also in the case where the determination at step S1805 is NO, the process proceeds to step S1807.

According to the above-described sixth embodiment, the following effects and advantages can be obtained.

The control apparatus 100, when activating the power conversion apparatus, that is, before staring the charging, detects whether the battery interconnection switch 40 or the positive terminal bypass switch 51 is stuck-ON using at least one of voltages detected by the respective voltage sensors 86 to 89. According to the present configuration, without actually controlling the battery interconnection switch 40 and the positive terminal bypass switch 51 to be ON and OFF, it can be detected whether the battery interconnection switch 40 and the positive terminal bypass switch 51 are stuck-ON.

In the case where the battery interconnection switch 40 or the positive terminal bypass switch 51 is stuck-ON, the voltages detected by the respective voltage sensors 86 to 89 are changed. Hence, focusing on any one of voltages detected by the respective voltage sensors 86 to 89, the control apparatus 100 is able to detect whether the battery interconnection switch 40 or the negative terminal bypass switch 51 is in a stuck-ON state.

### <Modification example of sixth embodiment>

The determination of the stuck-ON state described with reference to Figs.29 to 32 may be performed when terminating the power conversion apparatus not when activating the power conversion apparatus. When terminating the power conversion apparatus, that is, after completing the charging operation, since the respective switches are controlled to be in an OFF state, a determination whether a stuck-ON state is present can be made by the method same as that during the activation.

### <Seventh Embodiment>

Hereinafter, for the seventh embodiment, configurations different from those in the first embodiment will mainly be described with reference to the drawings. According to the present embodiment, as shown in Fig.33, the power conversion apparatus is further provided with a positive terminal bypass switch 51 that connects the positive terminal of the second storage battery 32 and the high voltage side electrical path 22H.

The control apparatus 100 is capable of individually charging the second storage battery 32 using the low voltage charger 200 in a state where the positive terminal bypass switch 51 is controlled to be ON, the negative terminal bypass switch 50, the battery interconnection switch 40, the motor side switch 60, the connection switch 80, the high voltage side main switch SMRH and the low voltage side main switch SMRL are controlled to be OFF, for example.

### <Eighth Embodiment>

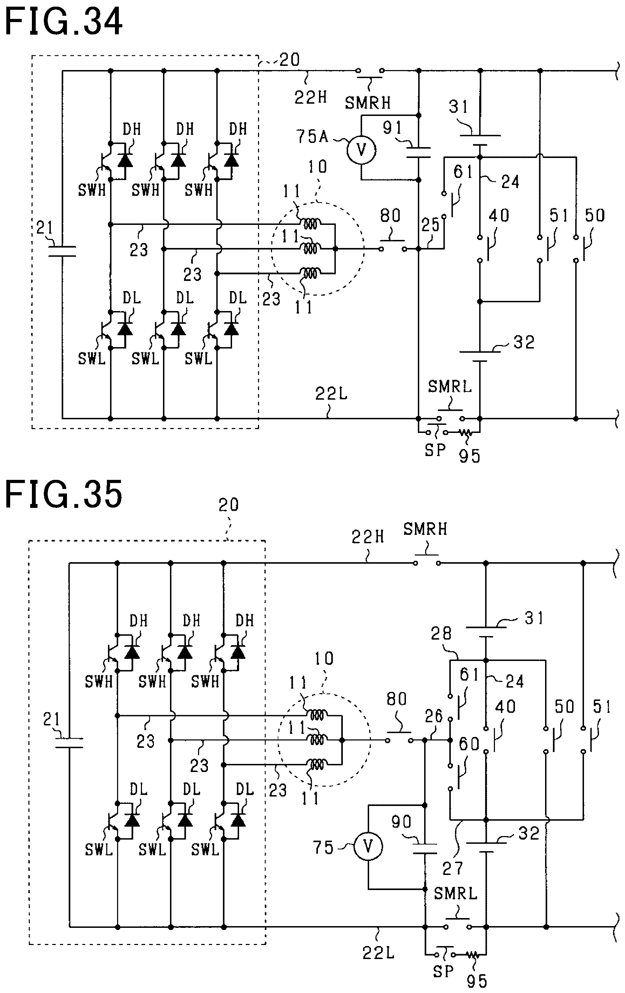

Hereinafter, for the eighth embodiment, configurations different from those in the fifth embodiment will mainly be described with reference to the drawings. According to the present embodiment, as shown in Fig.34, the power conversion apparatus is further provided with a negative terminal bypass switch 50 that connects the negative terminal of the first storage battery 31 and the low voltage side electrical path 22L.

The control apparatus 100 is capable of individually charging the first storage battery 31 using the low voltage charger 200 in a state where the negative terminal bypass switch 50 is controlled to be ON, the positive terminal bypass switch 51, the battery interconnection switch 40, the motor side switch 60, the connection switch 80, the high voltage side main switch SMRH and the low voltage side main switch SMRL are controlled to be OFF, for example.

### <Ninth Embodiment>

Hereinafter, for the ninth embodiment, configurations different from those in the above-described respective embodiments will mainly be described with reference to the drawings. According to the present embodiment, as shown in Fig.35, as a motor side switch, a switch that connects the neutral point of the armature winding 11 and the positive terminal of the second storage battery 32 is further provided in addition to the switch that connects the neutral point of the armature winding 11 and the negative terminal of the first storage battery 31.

A first end of a common path 26 is connected to the neutral point of the armature winding 11. A first end of the first electrical path 27 is connected to a second end of the common path 26. A portion of the battery interconnecting path 24 which is close to the second storage battery 32 side with respect to the battery interconnection switch 40 is connected to a second end of the first electrical path 27. Further, a first end of the second electrical path 28 is connected to the second end of the common path 26, and a portion of the battery interconnecting path 24 which is close to the first storage battery 31 side with respect to the battery interconnection switch 40 is connected to a second end of the second electrical path 28. A first motor side switch 60 is provided on the first electrical path 27. A second motor side switch 61 is provided on the second electrical path 28. Note that, respective first ends of the first electrical path 27 and the second electrical path 28 may be connected to the neutral point of the armature winding 11 without the common path 26.

According to the above-described present embodiment, processes shown in Fig.9 and processes shown in Fig.13 can be performed on the circuit configuration shown in Fig. 1.

### <Tenth Embodiment>

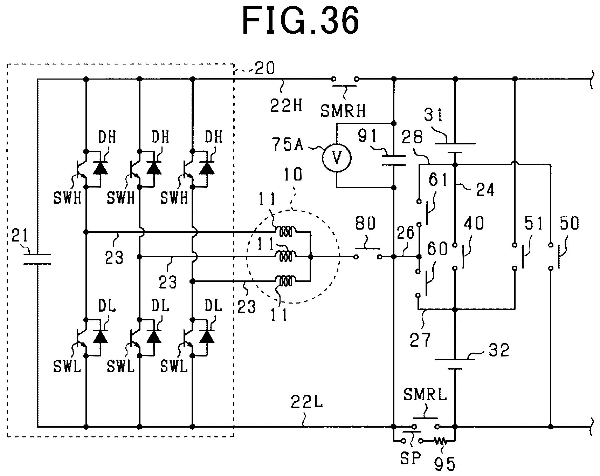

Hereinafter, for the tenth embodiment, configurations different from those in the above-described respective embodiments will mainly be described with reference to the drawings. According to the present embodiment, as shown in Fig.36, as a motor side switch, a switch that connects the neutral point of the armature winding 11 and the positive terminal of the second storage battery 32 is further provided in addition to the switch that connects the neutral point of the armature winding 11 and the negative terminal of the first storage battery 31.

A first end of a common path 26 is connected to the neutral point of the armature winding 11. A first end of the first electrical path 27 is connected to a second end of the common path 26. A portion of the battery interconnecting path 24 which is close to the second storage battery 32 side with respect to the battery interconnection switch 40 is connected to a second end of the first electrical path 27. Further, a first end of the second electrical path 28 is connected to the second end of the common path 26, and a portion of the battery interconnecting path 24 which is close to the first storage battery 31 side with respect to the battery interconnection switch 40 is connected to a second end of the second electrical path 28. A first motor side switch 60 is provided on the first electrical path 27. A second motor side switch 61 is provided on the second electrical path 28. Note that, respective first ends of the first electrical path 27 and the second electrical path 28 may be connected to the neutral point of the armature winding 11 without the common path 26.

According to the above-described present embodiment, processes shown in Fig.26 and processes shown in Fig.27 can be performed on the circuit configuration shown in Fig.25.

### <Other Embodiment>

Note that the above-described respective embodiments may be modified in the following manners.

As a motor, it is not limited to a configuration using a star-connection but a configuration using a delta-connection may be utilized. Further, as the motor and the inverter, it is not limited to a configuration for three-phases but a configuration for two-phases or four or more phases may be utilized. Furthermore, as a motor, it is not limited to a permanent-magnet type synchronous motor having a permanent magnet disposed on the rotor as a field pole, but a field-winding type synchronous motor having a field winding as a field pole disposed on the rotor may be utilized. In this case, a configuration may be utilized in which both of a field winding and a permanent magnet are provided on the rotor. Further, the motor may be configured as an induction motor not a synchronous motor.

As a switch of the inverter 20, it is not limited to IGBT in which freewheel diodes are reversely-connected in parallel, but a N-channel MOS FET provided with a body diode may be utilized. In this case, a high voltage side terminal of the N-channel MOSFET serves as a drain and a low voltage side terminal thereof serves as a source.

As a storage unit to be charged by an external charger, it is not limited to a storage unit, but may be a unit having an electric double layered capacitor having a large capacity or a unit having both a storage unit and an electric double layered capacitor.

The power conversion apparatus may be mounted to not only a mobile body but also a stationary type apparatus.

The controller and method described in this disclosure may be implemented by a dedicated computer provided by configuring a processor and memory programmed to perform one or more functions embodied by a computer program. Alternatively, the controller and method described in this disclosure may be implemented by a dedicated computer provided by configuring a processor with one or more dedicated hardware logic circuits. Alternatively, controller and method described in the present disclosure may be implemented by one or more dedicated computers configured by a combination of a processor and memory programmed to perform one or more functions and a processor configured by one or more hardware logic circuits. The computer program may also be stored in a computer-readable non-transitive tangible recording medium as instructions to be executed by a computer.

The present disclosure has been described in accordance with the embodiments, but it is understood that the present disclosure is not limited to the embodiments or structures. The present disclosure encompasses various modifications and variations in an equivalent range. In addition, the scope and spirit of the present disclosure encompass various combinations or forms and other combinations or forms including only one element, one or more elements, or one or less elements.

## Claims

1. A power conversion apparatus provided with a high voltage side electrical path (22H) capable of electrically connecting to a positive terminal of a first storage battery (31), a low voltage side electrical path (22L) capable of electrically connecting to a negative terminal of a second storage battery (32), an inverter (20) having an upper arm switch (SWH) electrically connected to the high voltage side electrical path and a lower arm switch (SWL) electrically connected to a low voltage side electrical path, and a motor (10) electrically connected to a connection point between the upper arm switch and the lower arm switch,
wherein
the power conversion apparatus comprises:
a battery interconnecting switch (40) disposed on an inter-storage electrical path (24) that electrically connects between a negative terminal of the first storage battery and a positive terminal of the second storage battery;
a bypass switch (50, 51) that performs at least one of an electrical connection between the negative terminal of the first storage battery and the negative terminal of the second storage battery and an electrical connection between the positive terminal of the first storage battery and the positive terminal of the second storage battery; and
a control unit (100) that detects, before controlling one switch between the battery interconnection switch and the bypass switch to be ON, whether the other switch is stuck ON.

2. The power conversion apparatus according to claim 1 further comprising:
a smoothing capacitor (21) that electrically connects between the high voltage side electrical path and the low voltage side electrical path and smooths an input voltage of the inverter;
a voltage sensor (19) that detects a voltage of the smoothing capacitor;
a high voltage side switch (SMRH) provided at a portion between a connection point of the upper arm switch and a connection point of the positive terminal of the first storage battery on the high voltage side electrical path;
a low voltage side switch (SMRL) provided at a portion between a connection point of the lower arm switch and a connection point of the negative terminal of the second storage battery on the low voltage side electrical path;
wherein
the control unit detects whether either one switch between the battery interconnecting switch and the bypass switch is stuck ON, based on a voltage of the smoothing capacitor detected by the voltage sensor when the high voltage side switch and the low voltage side switch are controlled to be ON.

3. The power conversion apparatus according to claim 2,
wherein
the bypass switch serves as a negative terminal bypass switch (50) that electrically connects between the negative terminal of the first storage battery and the negative terminal of the second storage battery;
the control unit detects that the battery interconnection switch and the negative terminal bypass switch are not stuck ON, when determining that the voltage of the smoothing capacitor equals 0V;
detects that the battery interconnection switch is stuck ON, when determining that the voltage of the smoothing capacitor equals a total voltage of a voltage of the first storage battery and a voltage of the second storage battery; and
detects that the negative terminal bypass switch is stuck ON, when determining that the voltage of the smoothing capacitor equals the voltage of the first storage battery.

4. The power conversion apparatus according to claim 1,
wherein
the motor includes an armature winding (11);
a connection point between the upper arm switch and the lower arm switch is electrically connected to a first end of the armature winding;
the power conversion apparatus further comprises:
a smoothing capacitor (21) that electrically connects the high voltage side electrical path and the low voltage side electrical path and smooths an input voltage of the inverter;
a voltage sensor (19) that detects a voltage of the smoothing capacitor;
a high voltage side switch (SMRH) provided at a portion between a connection point of the upper arm switch and a connection point of the positive terminal of the first storage battery on the high voltage side electrical path;
a motor side electrical path (25) that electrically connects a second end side of the armature winding and the inter-storage electrical path;
a motor side switch (60) provided on the motor side electrical path; and
a connection switch (80) provided at a portion on the motor side electrical path close to the connection point side relative to a position of the motor side switch,
wherein
the control unit detects whether either one switch between the battery interconnecting switch and the bypass switch is stuck ON, based on a voltage of the smoothing capacitor detected by the voltage sensor when the high voltage side switch, the motor side switch and the connection switch are controlled to be ON.

5. The power conversion apparatus according to claim 4,
wherein
the bypass switch serves as a negative terminal bypass switch (50) that electrically connects between the negative terminal of the first storage battery and the negative terminal of the second storage battery;
the motor side electrical path electrically connects a second end of the armature winding and a portion on the inter-storage electrical path close to the second storage battery side relative to a position of the battery interconnection switch;
the control unit detects that the battery interconnection switch and the negative terminal bypass switch are not stuck ON, when determining that the voltage of the smoothing capacitor equals 0V;
detects that the battery interconnection switch is stuck ON, when determining that the voltage of the smoothing capacitor equals the voltage of the first storage battery; and
detects that the negative terminal bypass switch is stuck ON, when determining that the voltage of the smoothing capacitor equals a voltage difference between the voltage of the first storage battery and the voltage of the second storage battery.

6. The power conversion apparatus according to claim 1,
wherein
the bypass switch serves as a negative terminal bypass switch (50) that electrically connects between the negative terminal of the first storage battery and the negative terminal of the second storage battery;
the control unit detects whether either one switch between the battery interconnection switch and the negative terminal bypass switch is stuck ON based on at least one of voltage across the battery interconnection switch, voltage across the negative terminal bypass switch, a voltage between the high voltage side electrical path and the low voltage side electrical path or a voltage between the positive terminal of the first storage battery and the positive terminal of the second storage battery.

7. The power conversion apparatus according to claim 6,
wherein
the control unit detects that the battery interconnection switch and the negative terminal bypass switch are not stuck ON, when determining that voltage across the battery interconnection switch equals a total voltage of the voltage of the first storage battery and the voltage of the second storage battery;
detects that the battery interconnection switch is stuck ON, when determining that voltage across the battery interconnection switch equals 0V; and
detects that the negative terminal bypass switch is stuck ON, when determining that the voltage across the battery interconnection switch equals the voltage of the second storage battery.

8. The power conversion apparatus according to claim 6,
wherein
the control unit detects that the battery interconnection switch and the negative terminal bypass switch are not stuck ON, when determining that voltage across the negative terminal bypass switch equals the voltage of the first storage battery;
detects that the battery interconnection switch is stuck ON, when determining that voltage across the negative terminal bypass switch equals the voltage of the second storage battery; and
detects that the negative terminal bypass switch is stuck ON, when determining that voltage across the negative terminal bypass switch equals 0V.

9. The power conversion apparatus according to claim 6,
wherein
the control unit detects that the battery interconnection switch and the negative terminal bypass switch are not stuck-ON, when determining that a voltage between the high voltage side electrical path and the low voltage side electrical path equals 0V;
detects that the battery interconnection switch is stuck ON, when determining that the voltage between the high voltage side electrical path and the low voltage side electrical path equals a total voltage of the voltage of the first storage battery and the voltage of the second storage battery; and
detects that the negative terminal bypass switch is stuck ON, when determining that the voltage between the high voltage side electrical path and the low voltage side electrical path equals the voltage of the first storage battery.

10. The power conversion apparatus according to claim 6,
wherein
the control unit detects that the battery interconnection switch and the negative terminal bypass switch are not stuck ON, when determining that a voltage between the positive terminal of the first storage battery and the positive terminal of the second storage battery equals the voltage of the second storage battery;
detects that the battery interconnection switch is stuck ON, when determining that a voltage between the positive terminal of the first storage battery and the positive terminal of the second storage battery equals the voltage of the first storage battery; and
detects that the negative terminal bypass switch is stuck ON, when determining that a voltage between the positive terminal of the first storage battery and the positive terminal of the second storage battery equals a voltage difference between the voltage of the first storage battery and the voltage of the second storage battery.

11. The power conversion apparatus according to claim 2,
wherein
the bypass switch serves as a positive terminal bypass switch (51) that electrically connects between the positive terminal of the first storage battery and the positive terminal of the second storage battery;
the control unit detects that the battery interconnection switch and the positive terminal bypass switch are not stuck ON, when determining that the voltage of the smoothing capacitor equals 0V;
detects that the battery interconnection switch is stuck ON, when determining that the voltage of the smoothing capacitor equals a total voltage of the voltage of the first storage battery and the voltage of the second storage battery; and
detects that the positive terminal bypass switch is stuck ON, when determining that the voltage of the smoothing capacitor equals the voltage of the second storage battery.

12. The power conversion apparatus according to claim 1,
wherein
the motor includes an armature winding (11);
a connection point between the upper arm switch and the lower arm switch is electrically connected to a first end of the armature winding;
the power conversion apparatus further comprises:
a smoothing capacitor (21) that electrically connects the high voltage side electrical path and the low voltage side electrical path and smooths an input voltage of the inverter;
a voltage sensor (19) that detects a voltage of the smoothing capacitor;
a low voltage side switch (SMRL) provided at a portion between a connection point of the lower arm switch and a connection point of the negative terminal of the second storage battery on the low voltage side electrical path;
a motor side electrical path (25) that electrically connects a second end side of the armature winding and the inter-storage electrical path;
a motor side switch (61) provided on the motor side electrical path; and
a connection switch (80) provided at a portion on the motor side electrical path close to the connection point side relative to a position of the motor side switch,
wherein
the control unit detects whether either one switch between the battery interconnection switch and the bypass switch is stuck ON, based on a voltage of the smoothing capacitor detected by the voltage sensor when the low voltage side switch, the motor side switch and the connection switch are controlled to be ON.

13. The power conversion apparatus according to claim 12,
wherein
the bypass switch serves as a positive terminal bypass switch (51) that electrically connects between the positive terminal of the first storage battery and the positive terminal of the second storage battery;
the motor side electrical path electrically connects a second end of the armature winding and a portion on the inter-storage electrical path close to the first storage battery side relative to a position of the battery interconnection switch;
the control unit detects that the battery interconnection switch and the positive terminal bypass switch are not stuck ON, when determining that the voltage of the smoothing capacitor equals 0V;
detects that the battery interconnection switch is stuck ON, when determining that the voltage of the smoothing capacitor equals the voltage of the second storage battery; and
detects that the positive terminal bypass switch is stuck ON, when determining that the voltage of the smoothing capacitor equals a voltage difference between the voltage of the second storage battery and the voltage of the first storage battery.

14. The power conversion apparatus according to claim 1,
wherein
the bypass switch serves as a positive terminal bypass switch (51) that electrically connects between the positive terminal of the first storage battery and the positive terminal of the second storage battery;
the control unit detects whether either one switch between the battery interconnection switch and the positive terminal bypass switch is stuck ON, based on at least one of voltage across the battery interconnection switch, voltage across the positive terminal bypass switch, a voltage between the high voltage side electrical path and the low voltage side electrical path or a voltage between the negative terminal of the first storage battery and the negative terminal of the second storage battery.

15. The power conversion apparatus according to claim 14,
wherein
the control unit detects that the battery interconnection switch and the positive terminal bypass switch are not stuck ON, when determining that voltage across the battery interconnection switch equals a total voltage of the voltage of the first storage battery and the voltage of the second storage battery;
detects that the battery interconnection switch is stuck ON, when determining that voltage across the battery interconnection switch equals 0V; and
detects that the positive terminal bypass switch is stuck ON, when determining that the voltage across the battery interconnection switch equals the voltage of the first storage battery.

16. The power conversion apparatus according to claim 14,
wherein
the control unit detects that the battery interconnection switch and the positive terminal bypass switch are not stuck ON, when determining that voltage across the positive terminal bypass switch equals the voltage of the second storage battery;
detects that the battery interconnection switch is stuck ON, when determining that voltage across the positive terminal bypass switch equals the voltage of the first storage battery; and
detects that the positive terminal bypass switch is stuck ON, when determining that voltage across the positive terminal bypass switch equals 0V.

17. The power conversion apparatus according to claim 14,
wherein
the control unit detects that the battery interconnection switch and the positive terminal bypass switch are not stuck ON, when determining that a voltage between the high voltage side electrical path and the low voltage side electrical path equals 0V;
detects that the battery interconnection switch is stuck ON, when determining that the voltage between the high voltage side electrical path and the low voltage side electrical path equals a total voltage of the voltage of the first storage battery and the voltage of the second storage battery; and
detects that the positive terminal bypass switch is stuck ON, when determining that the voltage between the high voltage side electrical path and the low voltage side electrical path equals the voltage of the second storage battery.

18. The power conversion apparatus according to claim 14,
wherein
the control unit detects that the battery interconnection switch and the positive terminal bypass switch are not stuck ON, when determining that a voltage between the negative terminal of the first storage battery and the negative terminal of the second storage battery equals the voltage of the first storage battery;
detects that the battery interconnection switch is stuck ON, when determining that a voltage between the negative terminal of the first storage battery and the negative terminal of the second storage battery equals the voltage of the second storage battery; and
detects that the positive terminal bypass switch is stuck ON, when determining that a voltage between the negative terminal of the first storage battery and the negative terminal of the second storage battery equals a voltage difference between the voltage of the second storage battery and the voltage of the first storage battery.

19. A program for a power conversion apparatus provided with a high voltage side electrical path (22H) capable of electrically connecting to a positive terminal of a first storage battery (31), a low voltage side electrical path (22L) capable of electrically connecting to a negative terminal of a second storage battery (32), an inverter (20) having an upper arm switch (SWH) electrically connected to the high voltage side electrical path and a lower arm switch (SWL) electrically connected to a low voltage side electrical path, a motor (10) electrically connected to a connection point between the upper arm switch and the lower arm switch and a computer (101),
wherein
the power conversion apparatus comprising:
a battery interconnection switch (40) disposed on an inter-storage electrical path (24) that electrically connects between a negative terminal of the first storage battery and a positive terminal of the second storage battery; and
a bypass switch (50, 51) that performs at least one of an electrical connection between the negative terminal of the first storage battery and the negative terminal of the second storage battery and an electrical connection between the positive terminal of the first storage battery and the positive terminal of the second storage battery,
wherein
the program causes the computer to execute a process that detects, before controlling one switch between the battery interconnection switch and the bypass switch to be ON, whether the other switch is stuck ON.
